(19) Europäisches Patentamt / European Patent Office / Office européen des brevets

(11) **EP 4 294 083 B1**

(12) **EUROPEAN PATENT SPECIFICATION**

(45) Date of publication and mention
of the grant of the patent:
**06.08.2025 Bulletin 2025/32**

(21) Application number: **22752245.5**

(22) Date of filing: **08.02.2022**

(51) International Patent Classification (IPC):
*H04L 5/00* (2006.01)      *H04L 27/26* (2006.01)
*H04W 48/16* (2009.01)

(52) Cooperative Patent Classification (CPC):
**H04L 5/0048; H04L 5/0051; H04L 27/2613;
H04L 27/2639;** H04W 48/16

(86) International application number:
**PCT/CN2022/075537**

(87) International publication number:
**WO 2022/171084 (18.08.2022 Gazette 2022/33)**

(54) **ACCESS METHOD AND APPARATUS, AND COMMUNICATION DEVICE AND READABLE STORAGE MEDIUM**

ZUGRIFFSVERFAHREN UND -VORRICHTUNG SOWIE KOMMUNIKATIONSVORRICHTUNG UND LESBARES SPEICHERMEDIUM

PROCÉDÉ ET APPAREIL D'ACCÈS, ET DISPOSITIF DE COMMUNICATION ET SUPPORT DE STOCKAGE LISIBLE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **10.02.2021  CN 202110184964**

(43) Date of publication of application:
**20.12.2023  Bulletin 2023/51**

(73) Proprietor: **Vivo Mobile Communication Co., Ltd.
Dongguan, Guangdong 523863 (CN)**

(72) Inventors:
 • **YUAN, Pu
   Dongguan, Guangdong 523863 (CN)**
 • **JIANG, Dajie
   Dongguan, Guangdong 523863 (CN)**

(74) Representative: **Murgitroyd & Company
165-169 Scotland Street
Glasgow G5 8PL (GB)**

(56) References cited:
**EP-A1- 4 191 929        EP-A1- 4 277 183
WO-A1-2020/023248        CN-A- 108 781 160
CN-A- 109 348 739        CN-A- 111 786 763
CN-A- 112 003 808        CN-A- 112 087 247
US-A1- 2019 342 136**

• **RAVITEJA P ET AL: "Embedded Pilot-Aided Channel Estimation for OTFS in Delay-Doppler Channels", IEEE TRANSACTIONS ON VEHICULAR TECHNOLOGY, IEEE, USA, vol. 68, no. 5, 1 May 2019 (2019-05-01), pages 4906 - 4917, XP011725863, ISSN: 0018-9545, [retrieved on 20190528], DOI: 10.1109/TVT.2019.2906357**
• **COHERE TECHNOLOGIES ET AL: "OTFS Modulation Waveform and Reference Signals for New RAT", no. Busan, South Korea; 20160411 - 20160415, 2 April 2016 (2016-04-02), XP051080414, Retrieved from the Internet <URL:http://www.3gpp.org/ftp/tsg_ran/ WG1_RL1/TSGR1_84b/Docs/> [retrieved on 20160402]**

EP 4 294 083 B1

## Description

### TECHNICAL FIELD

This application relates to the field of communications technologies, and specifically, to an access method and apparatus, a communication device, and a readable storage medium.

### BACKGROUND

In an initial access process in a new radio (New Radio, NR) single base station cell, a terminal obtains system information (system information, SI) by using a synchronization signal (including primary synchronization information (Primary Synchronization Signal, PSS) and secondary synchronization information (Secondary Synchronization Signal, SSS)) in a detected synchronization signal block (Synchronization Signal Block, SSB), and a reference signal (for example, a demodulation reference signal (Demodulation Reference Signal, DMRS)) and data information (for example, a master information block (Master Information Block, MIB)) in a detected physical broadcast channel (Physical Broadcast Channel, PBCH), so as to carry out random access based on information included in the SI including information required for accessing a system. In the foregoing process, the synchronization signal, the reference signal, and the data information are tightly coupled.

In addition, in a cell-free network, a terminal may receive signals from a plurality of transmitting and receiving points (Transmission Reception Points, TRPs), and therefore which TRPs that the terminal has accessed need to be determined before performing subsequent obtaining of SI and random access. In a case that TRP selection during initial access is performed by using the synchronization signal, because the synchronization signal, the reference signal, and the data information are tightly coupled, the overhead of the TRP selection is apt to increase, which further causes a relatively high overhead of the initial access. US2019/342136A1 discloses a method that includes generating a pilot signal that is represented using a complex exponential signal having a first linear phase in a time dimension and a second linear phase in a frequency dimension; and transmitting the pilot signal over a wireless communication channel using transmission resources that are designated for pilot signal transmission in a legacy transmission network. CN112003808A discloses a signal processing method that includes the steps of: obtaining a pilot sequence; mapping the pilot sequence to a pilot region of a time delay-Doppler domain, mapping the cyclic prefix of the pilot sequence to a guard interval of the time delay-Doppler domain, mapping a data signal to a data region of the time delay-Doppler domain, and obtaining a time delay-Doppler domain signal.

### SUMMARY

Embodiments of this application provide an access method and apparatus, a communication device, and a readable storage medium, which can resolve the problem of the relatively high overhead of an initial access caused by tight coupling of a synchronization signal, a reference signal, and data information. The invention is set out in the appended set of claims.

According to a first aspect, an embodiment of this application provides an access method. The method includes:

obtaining, by a terminal, a first delay Doppler domain data set, where the first delay Doppler domain data set is obtained by mapping N pilot signals on a resource location of a first delay Doppler domain resource block, and N is an integer greater than 1; and

accessing, by the terminal, P first network side devices based on a detection result of the first delay Doppler domain data set, where P is an integer less than or equal to N; and
the P first network side devices are any of the following:

P first network side devices corresponding to P first resource locations, where the P first resource locations are P resource locations where peak values are detected on the first delay Doppler domain resource block; and
P first network side devices corresponding to P first pilot signals, where the P first pilot signals are P pilot signals where peak values are detected.

According to a second aspect, an embodiment of this application provides an access apparatus. The access apparatus includes:

an obtaining module, configured to obtain a first delay Doppler domain data set, where the first delay Doppler domain data set is obtained by mapping N pilot signals on a resource location of a first delay Doppler domain resource block, and N is an integer greater than 1;

an access module, configured to access P first network side devices based on a detection result of the first delay Doppler domain data set, where P is an integer less than or equal to N; and
the P first network side devices are any of the following:

P first network side devices corresponding to P first resource locations, where the P first resource locations are P resource locations where peak values are detected on the first delay Doppler domain resource block; and
P first network side devices corresponding to P first pilot signals, where the P first pilot signals are P pilot signals where peak values are detected.

According to a third aspect, an embodiment of this application provides a readable storage medium, storing a program or instructions, where when the program or the instructions are executed by a processor, the steps of the method according to the first aspect are implemented.

According to a fourth aspect, provided is a computer program product, where the computer program product is stored on a non-volatile storage medium, where the computer program product is executed by at least one processor, to implement the method according to the first aspect.

In the embodiments of this application, the terminal may perform access selection based on the pilot signal separately sent by the first network side device, so that decoupling of a synchronization signal and system information in an SSB can be implemented, thereby reducing the resource overhead of initial access. In addition, the pilot signal selected by the first network side device is processed and sent by using an OTFS technology, so that the reliability of selection by the first network side device selection can be improved.

## BRIEF DESCRIPTION OF THE DRAWINGS

FIG. 1 is a block diagram of an applicable radio communication system according to an embodiment of this application;
FIG. 2 is a schematic diagram of conversion between a delay Doppler domain and a time frequency domain according to an embodiment of this application;
FIG. 3 is a schematic diagram of a channel response relationship at different planes according to an embodiment of this application;
FIG. 4 is a schematic processing diagram of sending and receiving ends of an OTFS multi-carrier system according to an embodiment of this application;
FIG. 5 is a schematic pilot mapping diagram of a delay Doppler domain according to an embodiment of this application;
FIG. 6 is a schematic diagram of pilot location detection according to an embodiment of this application;
FIG. 7 is a schematic diagram of pilot resource reuse of a delay Doppler domain according to an embodiment of this application;
FIG. 8 is a schematic diagram of detection of a pilot sequence according to an embodiment of this application;
FIG. 9 is a schematic diagram of performance comparison between two pilot design solutions in different pilot overhead conditions according to an embodiment of this application;
FIG. 10 is a schematic structural diagram of a cell-free network according to an embodiment of this application;
FIG. 11 is a schematic structural diagram of a super cell according to an embodiment of this application;
FIG. 12 is a flowchart of an access method according to an embodiment of this application;
FIG. 13 is a schematic diagram of distinguishing TRPs by using different mapping locations of a pilot sequence according to an embodiment of this application;
FIG. 14 is a schematic diagram of distinguishing TRPs by using different pilot sequences according to an embodiment of this application;
FIG. 15 is a schematic diagram of distinguishing TRPs by using different mapping locations of a pilot pulse according to an embodiment of this application;
FIG. 16 is a flowchart of an access method according to another embodiment of this application, the embodiment of FIG. 16 is not covered by the claimed application;
FIG. 17 is a structural diagram of an access apparatus according to an embodiment of this application;
FIG. 18 is a structural diagram of an access apparatus according to another embodiment of this application, the embodiment of FIG. 18 is not covered by the claimed application;
FIG. 19 is a structural diagram of a communication device according to an embodiment of this application;
FIG. 20 is a structural diagram of a terminal according to an embodiment of this application; and
FIG. 21 is a structural diagram of a network side device according to an embodiment of this application, the embodiment of FIG. 21 is not covered by the claimed application.

## DETAILED DESCRIPTION

The technical solutions in embodiments of this application are clearly and completely described in the following with reference to the accompanying drawings in the embodiments of this application.

In the specification and claims of this application, the terms "first" and "second" are used to distinguish similar objects, but are unnecessarily used to describe a specific sequence or order. It is to be understood that data used in this way is exchangeable in a proper case, so that the embodiments of this application described herein can be implemented in an order different from the order shown or described herein, and in addition, the objects distinguished by "first" and "second" are generally one type, and the number of the objects is not limited, for example, there may be one first object, or a plurality of first objects. In addition, "and/or" used in this specification and the claims represents at least one of the connected objects, and the character "/" generally indicates that the associated objects are in an "or" relationship.

It is worth pointing out that the technologies described in the embodiments of this application are not limited to the long term evolution (Long Term Evolution, LTE)/LTE-advanced (LTE-Advanced, LTE-A) systems, and may also be used in other radio communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are often used interchangeably. The technology described in this application can be applied to the systems and radio technologies mentioned above, and can also be applied to other systems and radio technologies. However, the following description describes a new radio (New Radio, NR) system for exemplary purposes, and uses the NR terminology in most of the following description, these techniques are also applicable to applications other than NR system applications, such as a 6th generation (6th Generation, 6G) communication system.

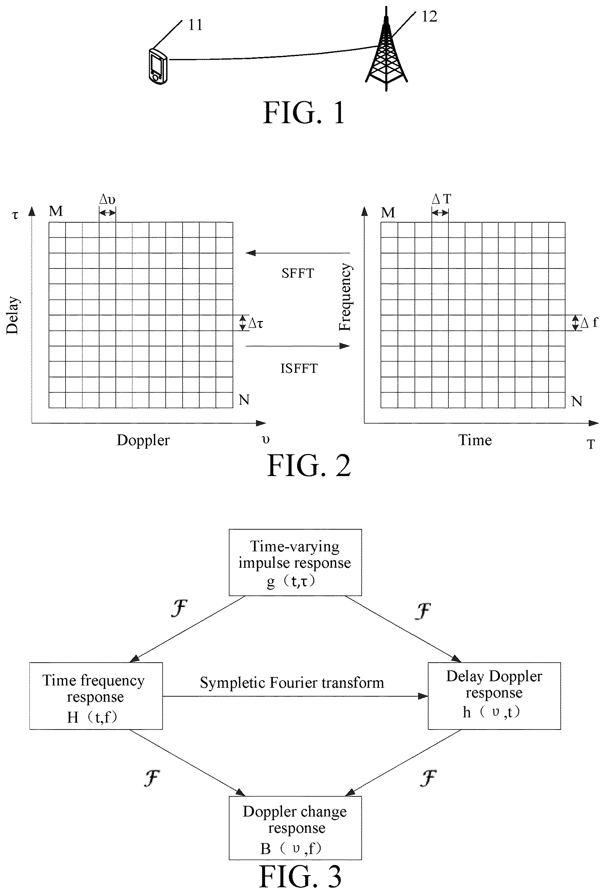

FIG. 1 is a block diagram of an applicable radio communication system according to an embodiment of this application. The radio communication system includes a terminal 11 and a network side device 12. The terminal 11 may also be referred to as a terminal device or user equipment (User Equipment, UE), and the terminal 11 may be a terminal side device such as a mobile phone, a tablet computer (Tablet Personal Computer), a laptop computer (Laptop Computer) or referred to as a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), a wearable device (Wearable Device), or vehicle user equipment (Vehicle User Equipment, VUE), or pedestrian user equipment (Pedestrian User Equipment, PUE). The wearable device includes: a bracelet, a headphone, glasses, or the like. It should be noted that, the specific type of the terminal 11 is not limited in the embodiments of this application. The network side device 12 may be a cell, a super cell, a base station or a core network. The base station may be referred to as an access point, a base transceiver station (Base Transceiver Station, BTS), a radio base station, a radio transceiver, a basic service set (Basic Service Set, BSS), an extended service set (Extended Service Set, ESS), a B node, an evolved B node (eNB), a home B node, a home evolved B node, a WLAN access point, a Wi-Fi node, a transmitting receiving point (Transmission Reception Point, TRP) or another suitable term in the field, as long as the same technical effect is achieved, and the base station is not limited to specific technical terms.

For ease of understanding, some of the content involved in the embodiments of this application are described below.

I. Orthogonal time frequency space (Orthogonal Time Frequency Space, OTFS) domain.

Delay and Doppler properties of a channel are essentially determined by a multi-path channel. Signals that arrive at a receiver through different paths have different arrival times because of differences in propagation courses. For example, in a case that two echoes $s_1$ and $s_2$ arrive at the receiver after respectively going through distances $d_1$ and $d_2$, a time difference between arrivals at the receiver is $\Delta t = \frac{|d_1 - d_2|}{c}$, where c is the speed of light. Due to existence of such the time difference between the echoes $s_1$ and $s_2$, coherent superposition of the echoes at the receiver side causes observed signal amplitude jitter, that is, a fading effect. Similarly, Doppler spread in a multi-path channel is likewise caused by a multi-path effect. The Doppler effect is caused by existence of relative speed at sending and receiving ends. There are differences in incident angles, of signals that arrive at a receiver through different paths, relative to a normal of an antenna, which therefore causes the difference in the relative speed, and further results in a difference in the Doppler shift of the signals from the different paths. Assuming that an original frequency of a signal is f, the relative speed of the sending and receiving ends is $\Delta v$, and an incident angle between the signal and a normal of the receiving antenna is $\theta$, then: $\Delta f = \frac{\Delta v}{f} \cos \theta$, where $\Delta f$ is the Doppler shift. Apparently, in a case that two echoes $s_1$ and $s_2$ arrive at a receiving antenna through different paths and therefore have different incident angles $\theta_1$ and $\theta_2$, obtained Doppler shifts $\Delta f_1$ and $\Delta f_2$ of the two echoes are also different. To sum up, the signal viewed at a receiver end is a superposition of signals having different time delays and Doppler components from different paths, and is embodied, as a whole, as a received signal having fading and frequency shift relative to the original signal. Delay Doppler analysis of the channel is helpful in collecting delay Doppler information of each path, so as to reflect a delay Doppler response of the channel.

OTFS modulation technology: information of a M × N data packet, for example, a quadrature amplitude modulation (Quadrature Amplitude Modulation, QAM) symbol, is logically mapped to one M × N lattice on a two-dimensional delay Doppler plane, that is, pulses in each lattice are modulated with one QAM symbol in the data packet. Further, by designing a group of orthogonal two-dimensional functions, a data set on the M × Ndelay Doppler domain plane is transformed into a N × M time frequency domain plane. This transform is mathematically referred to as the inverse symplectic Fourier transform (Inverse Symplectic Fourier Transform, ISFFT). Correspondingly, the transform from the time frequency domain to the delay Doppler domain is referred to as a symplectic Fourier transform (Symplectic Fourier Transform, SFFT). The underlying physical meaning is that the delay and Doppler effect of a signal is essentially a linear superposed effect of a series of echoes having different time and frequency offsets after a signal passes through a multi-path channel. In this sense, the delay Doppler analysis and the time frequency domain analysis can be obtained by mutual conversion between the ISSFT and the SSFT, and the conversion relationship may be referred to in FIG. 2.

Therefore, by the OTFS technology, the time-varying multi-path channel is transformed into a time-invariant two-dimensional delay Doppler domain channel (within a particular duration), thereby directly reflecting the channel delay Doppler response properties caused by geometric properties of relative positions of reflectors between a sender and a receiver in a radio link. The advantages lie in that by the OTFS, the difficulties in tracking the time-varying fading properties by conventional time frequency domain analysis are eliminated, and instead all diversity properties of a time frequency domain channel are extracted by the delay Doppler domain analysis. In an actual system, because a quantity of delay path and Doppler shifts of a channel are much smaller than a quantity of time domain and frequency domain responses of the channel, a channel impulse response matrix indicated by the delay Doppler domain is sparse. By the analysis of a sparse channel matrix in a delay Doppler domain by using the OTFS technology, encapsulation of a reference signal is enabled to become more compact and flexible, which is especially beneficial to supporting a large antenna array in a large-scale MIMO system.

The core of OTFS modulation is that a QAM symbol defined on a delay Doppler plane is transformed into the time frequency domain for sending, and then returned to the delay Doppler domain for processing at the receiving end. Therefore, a radio channel response analysis method in the delay Doppler domain can be introduced. In a case that a signal passes through a linear time-varying wireless channel, a relationship of expressions of channel responses in different planes is shown in FIG. 3.

In FIG. 3, an SFFT transform formula is:

$$h(\tau, \nu) = \int \int H(t, f)e^{-j2\pi(\nu t - f\tau)}d\tau d\nu \quad (1)$$

Correspondingly, the transform formula of ISFFT is:

$$H(t, f) = \int \int h(\tau, \nu)e^{j2\pi(\nu t - f\tau)}d\tau d\nu \quad (2)$$

In a case that a signal passes through a linear time-varying channel, a time domain received signal is $r(t)$, a corresponding frequency domain received signal is $R(f)$, and $r(t) = F\{^{-1}R(f)\}$. $r(t)$ can be expressed in the following:

$$r(t) = s(t) * h(t) = \int g(t, \tau)s(t - \tau)d\tau \quad (3)$$

As can be learned from the relationship in FIG. 3,

$$g(t, \tau) = \int h(\nu, \tau)e^{j2\pi\nu t}d\nu \quad (4)$$

By substituting (4) into (3), the following is obtained:

$$r(t) = \int \int h(v,\tau)s(t-\tau)e^{j2\pi vt}d\tau dv \qquad (5)$$

From the relationship shown in FIG. 3, as can be learned from the typical Fourier transform theory and formula (5),

$$
\begin{aligned}
r(t) &= \int \int h(v,\tau)\left(\int S(f)\,e^{j2\pi f(t-\tau)}df\right)e^{j2\pi vt}d\tau dv \\
&= \int \left(\int \int h(v,\tau)e^{j2\pi(vt-f\tau)}d\tau dv\right)S(f)e^{j2\pi ft}df \\
&= \int H(t,f)S(f)e^{j2\pi ft}df \\
&= \mathcal{F}^{-1}\{R(f)\} \qquad (6)
\end{aligned}
$$

where $v$ represents a delay variable, $\tau$ represents a Doppler variable, $f$ represents a frequency variable, and t represents a time variable.

Equation (6) implies that the analysis of the delay Doppler domain in the OTFS system may be implemented by relying on an existing communication framework established in the time frequency domain and adding an additional signal processing process at the sending and receiving ends. In addition, the additional signal processing only consists of Fourier transform, which can be completely implemented by existing hardware without adding new modules. This good compatibility with the existing hardware systems greatly facilitates the application of OTFS systems. In an actual system, the OTFS technology can be conveniently implemented as pre-processing and post-processing modules of a filtered OFDM system, and therefore has good compatibility with a multi-carrier system in a New Radio (New Radio, NR) technology architecture.

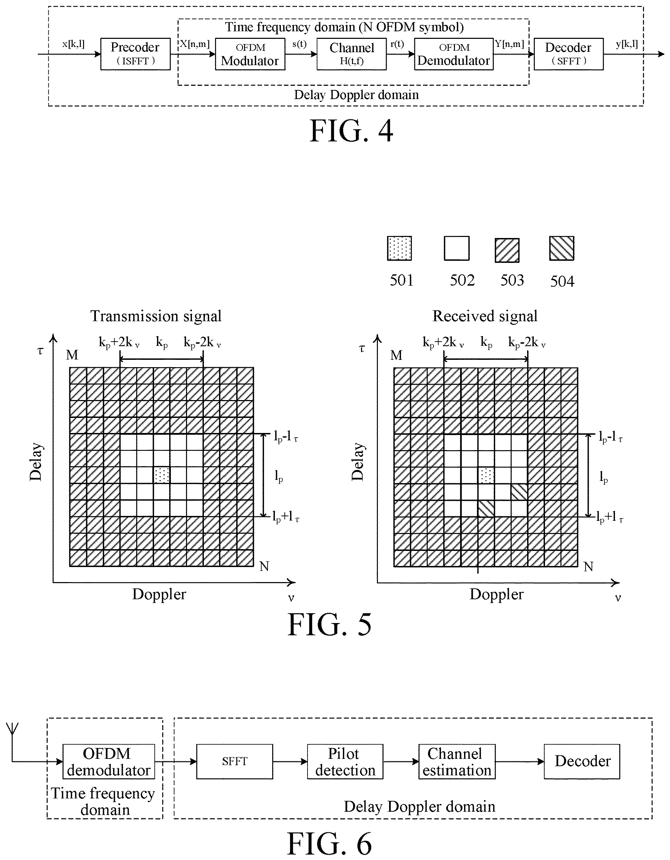

In a case that the OTFS is combined with a multi-carrier system, an implementation at the sending end is implemented in the following: The QAM symbol including information to be sent is carried by a waveform of a delay Doppler plane, converted into a waveform of a time frequency domain plane in a conventional multi-carrier system through a two-dimensional ISFFT, and then converted through a symbol-level one-dimensional inverse fast Fourier transform (Inverse Fast Fourier Transform, IFFT) and serial-to-parallel conversion into time domain sampling points to be sent. A process at the receiving end of an OTFS system is roughly an inverse process of the sending end: After being received by the receiver, the time domain sampling points are first transformed into a waveform on the time frequency domain plane through parallel-to-serial conversion and symbol-level one-dimensional fast Fourier transform (Fast Fourier Transform, FFT), and then converted into a waveform on the delay Doppler domain plane through the SFFT, and then the QAM symbol carried by the delay Doppler domain waveform is processed at the receiver: including channel estimation and equalization, demodulation and decoding, or the like. The processing flow of the sending and receiving ends of the OTFS system can be referred to in FIG. 4. FIG. 4 illustrates a precoder (Precoder); an orthogonal frequency division multiplex (Orthogonal Frequency Division Multiplex, OFDM) modulator (Modulator); a channel (Channel); an OFDM demodulator (Demodulator); and a decoder (Decoder).

The advantages of the OTFS modulation are mainly reflected in the following aspects.

1) By the OTFS modulation, a time-varying fading channel in the time frequency domain between the sender and the receiver is converted into a deterministic fading-free channel in the delay Doppler domain. In the delay Doppler domain, each symbol in a set of information symbols sent at a time goes through a same static channel response and signal-to-noise ratio (Signal Noise Ratio, SNR).

2) The OTFS system resolves reflectors in the physical channel by using the delay Doppler image, and coherently combines, by using a receive equalizer, energy from different reflection paths, which actually provides a fading-free static channel response. By using the foregoing static channel properties, the OTFS system does not need to introduce closed-loop channel adaptation to deal with a fast-changing channel like the OFDM system, which therefore improves the robustness of the system and reduces the complexity of system design.

3) A quantity of delay-Doppler states in a delay Doppler domain is much smaller than a quantity of time frequency states in a time frequency domain, and therefore a channel in the OTFS system can be expressed in a very compact form. The channel estimation overhead of the OTFS system is small and accurate.

4) Another advantage of the OTFS is reflected in dealing with an extreme Doppler channel. Through the analysis of the delay Doppler image by using appropriate signal processing parameters, Doppler properties of the channel may be fully presented, which therefore facilitates signal analysis and processing in a Doppler-sensitive scenario (for example, high-speed mobility and a millimeter wave).

To sum up, the channel estimation in the OTFS system uses the following method: a transmitter maps a pilot pulse mapping on a delay Doppler domain, and a receiver performs analysis by using a delay Doppler image for the pilot, estimates a channel response $h(\nu, \tau)$ of a delay Doppler domain, and then based on the relationship in FIG. 3, obtains a channel response expression of a time frequency domain, so that it is convenient to perform signal analysis and processing by applying the existing technologies of the time frequency domain. The method in FIG. 5 may be used in pilot mapping on the delay Doppler plane.

In FIG. 5, a transmission signal is a single-point pilot 501 at $(I_p, k_p)$, guard symbols 502 surrounding the single-point pilot 501 and having an area of $(2I_\nu + 1)(4k_\nu + 1) - 1$, and a data part 503 of MN - $(2I_\nu + 1)(4k_\nu + 1)$. Moreover, at the receiving end, two offset peak values 504 appear in a guard band of the delay Doppler domain lattice, which means that there are two secondary paths having different delay Doppler in addition to a primary path. By measuring amplitude, delay, and Doppler parameters of all the secondary paths, a delay Doppler domain expression, that is, $h(\nu, \tau)$, of the channel can be obtained. In order to prevent the data on the received signal lattice from polluting the pilot symbol, which results in inaccurate channel estimation, the area of the guard symbol needs to meet the following condition:

$$l_\tau \geq \tau_{\max} M\Delta f, k_\nu \geq \nu_{\max} N\Delta T \quad (7)$$

where $\tau_{\max}$ and $\nu_{\max}$ are a maximum time delay and a maximum Doppler shift of all paths of the channel, the plurality of guard symbols 502 surround the single-point pilot 501 to form a guard band, and the plurality of guard symbols 502 correspond to blank resource elements.

As shown in FIG. 6, the receiver converts the received time domain sampling points into a QAM symbol in the delay Doppler domain through the processes of the OFDM demodulator and the OTFS transform (the SFFT in the figure), and then determines a location of a pilot pulse by using threshold-based signal power detection. It is worth noting that because power-boost may be typically performed during transmission of a pilot, a power of a pilot pulse at the receiver side is much greater than a data power, and as can be learned from the principle analysis in the background, the pilot pulse and the data symbol go through exactly the same fading. Therefore, the pilot location is easily determined by using power detection. FIG. 6 illustrates pilot detection; and channel estimation.

The example in FIG. 5 corresponds to a single-port scenario, that is, only one group of reference signals need to be sent. In a modern multi-antenna system, typically a plurality of antenna ports are used to simultaneously send multi-stream data, so as to make full use of the spatial degree of freedom of the antennas, thereby achieving the purpose of obtaining a spatial diversity gain or improving the system throughput. In a case that a plurality of antenna ports exist, a plurality of pilots need to be mapped in a delay Doppler plane. For example: 24 antenna ports correspond to 24 pilot signals, and each pilot signal uses the form in FIG. 5, that is, a mode of a central point impulse signal plus two side guard symbols. A quantity of delay Doppler domain REs (resource elements) occupied by a single pilot is $(2I_\tau + 1)(4k_\tau + 1)$. In a case that there are P antenna ports and in consideration of that a guard band of an adjacent antenna port can be reused, assuming that the pilot placement adopts a delay dimension of $P_1$, a Doppler dimension of $P_2$, and $P = P_1P_2$ is met, a total resource overhead of the pilot is $[P_1(l_\tau + 1) + l_\tau][P_2(2k_\nu + 1) + 2k_\nu]$.

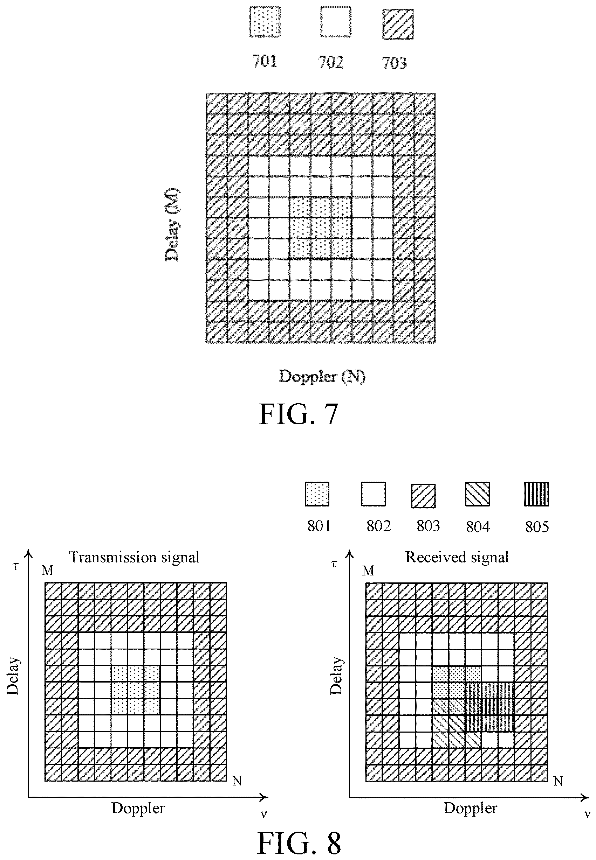

It can be learned that although the single-port transmission has the advantages of less resource occupation and simple detection algorithm, for a communication system having a plurality of antenna ports, resource reusing cannot be performed in the solution of a single-point pilot plus a guard band, which results in a linear increase in the overhead. Therefore, for a multi-antenna system, a pilot mapping solution shown in FIG. 7 is proposed.

In FIG. 7, a pilot does not exist in a form of a single-point pulse, but is a pilot sequence that is constructed based on a pseudo noise (Pseudo Noise, PN) sequence generated in a specific manner, and the pilot is mapped to a two-dimensional resource lattice on a delay Doppler plane based on a specific rule. Hereinafter, a resource location occupied by a pilot sequence is referred to as a pilot resource block 701. A portion beside the pilot resource block 701 is a pilot guard band 702, which is composed of blank resource elements over which no signal/data is transmitted. Similar to the single-point pilot in FIG. 5, the guard band 702 is also provided around the pilot resource block 701 to avoid mutual interference with data 703. A width of the guard band is calculated by using the same method as that in the single-point pilot mapping mode in FIG. 5. The difference lies in that in the resource part mapped by the pilot sequence, pilots having low correlations may be selected for pilot sequences of different ports, superimposition and mapping are performed on a same block of resource, and then detection of a pilot sequence is performed at the receiver end by using a specific algorithm, so as to distinguish pilots corresponding to different antenna ports. Since complete resource reusing is performed at the transmitting end, the pilot overhead in the multi-antenna port system can be greatly reduced.

An example in FIG. 8 presents a sequence pilot-based detection method. Similar to the foregoing scenario in FIG. 5, at the receiving end, due to the different delays and Doppler shifts of the two paths of the channel, received pilot signal blocks are shifted to a first block location 804 and a second block location 805 as a whole in delay Doppler. In this case, a slide window detection operation is performed in the delay Doppler domain by using a known transmission pilot 801 at the receiving end. In a case it is known that a slide window detection operation result $M(R,S)[\delta,\omega]$ is in $N_P \rightarrow +\infty$, the following

properties are obtained (the probability of establishment of the following formula is close to 1):

$$M(R,S)[\delta,\omega] = 1 + \varepsilon'_{N_P}, \ if(\delta,\omega) = (\delta_0,\omega_0)$$
$$= \varepsilon_{N_P}, \quad if(\delta,\omega) \neq (\delta_0,\omega_0).$$

where $|\varepsilon'_{N_P}| \leq \dfrac{1}{\sqrt{N_P}}$, $|\varepsilon_{N_P}| \leq \dfrac{C+1}{\sqrt{N_P}}$, and $C > 0$ is a particular constant and decreases along with an increase in a signal-to-noise and interference ratio (SINR) of the signal. The formula may be suitable for a merge format. In the formula, $(\delta,\omega)$ is a current location of the slide window (central point), and $(\delta_0,\omega_0)$ is a location to which a pilot signal block (central point) in the received signal is offset. As can be learned from the formula, only when $(\delta,\omega) = (\delta_0,\omega_0)$, a value near 1 can be obtained, and otherwise, the result of the slide window detection operation is a relatively small value. Therefore, in a case that the slide window coincides with the offset pilot signal block, an energy peak may be calculated by a detector and is present at a location $(\delta_0,\omega_0)$ of the delay Doppler plane. By using this method, as long as $N_P$ is ensured to have a sufficient length, the receiver may obtain a correct pilot location based on a value of $M(R,S)$, that is, obtain delay and Doppler information of the channel. In addition, an amplitude value of the channel is given by a value $1 + \varepsilon'_{N_P}$ obtained through detection operation.

The solution in FIG. 8 (referred to as the pilot sequence for short) and the solution in FIG. 5 (referred to as pilot pulse for short) each have advantages and disadvantages. The advantages of the pilot sequence solution are: 1) facilitating multi-port/multi-user reusing; 2) capable of flexibly adjusting the accuracy of sequence detection; 3) saving the guard symbol overhead; and 4) even if the overheads are insufficient. The disadvantages are: 1) high complexity of sequence correlation/matching detection; and 2) the accuracy being restricted by the sequence length.

The advantages of the pilot pulse solution are: 1) the receiving end requiring only use of simple energy detection; and 2) capable of improving the detection success rate through power boost (the power boost means the transmitter increases a transmit power of the pilot signal alone). The disadvantages are: 1) a separate guard band needs to be configured for each pilot pulse, which results in high overhead during multi-port transmission.

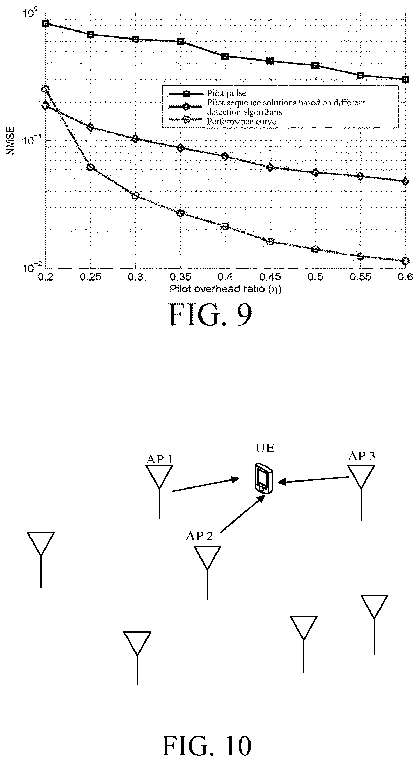

The foregoing advantages and disadvantages can summarize the performance of the two solutions in various scenarios. In addition, in some scenarios, the overhead of the pilot guard interval is limited and is not sufficient to fully cover all possible delays and Doppler shifts of the channel. In this case, the pilot sequence solution still shows acceptable performance, while the pilot pulse solution suffers a large performance loss. As shown in FIG. 9, in the special scenario (the delay and the Doppler shift of the channel are relatively large) in the figure, even if the pilot overhead reaches 60%, the performance of the pilot pulse solution is still far inferior to the performance of the pilot sequence solution.

In the delay Doppler domain, a general method for constructing a pilot (or reference signal) sequence is in the following: First, a base sequence is generated. Then, the base sequence is modulated to generate a pilot sequence. Optionally, the orthogonality may be further improved by using an OCC for the pilot sequence.

The base sequence may be a ZC sequence or a PN sequence, where further, the PN sequence includes the following sequences: an M sequence, a Gold sequence, a Kasami sequence, a Barker sequence, or the like.

A general process for inserting a pilot at a sending end is: A pilot sequence and data are modulated separately and then placed in a same delay Doppler resource block. The pilot and the data occupy orthogonal resources and are separated by a guard band. The entire delay Doppler resource block including the pilots and the data is transformed into a time frequency domain by ISSFT, and then converted, through OFDM-like processing, into a time domain signal for transmission.

II. Cell-free (Cell-free) network.

In a conventional cell-based system, each cell has a specific coverage region, and a downlink or uplink signal during communication between UE and the cell is associated with information (for example, a cell ID) of the cell. The UE needs to perform inter-cell handover or cell reselection during movement between different cells. UE at an edge of a cell is typically subject to interference from a neighboring cell.

The concept of cell free rejects the concept of cell. As shown in FIG. 10, in this case, the system consists of a great number of dense access points (Access Points, APs) or TRPs, and UE communicates with one or more neighboring APs/TRPs. In a case that the UE moves between different APs, a serving AP (which may be one AP or a plurality of APs) of the UE may change. In a cell free architecture, there is no concept of a cell ID, and inter-cell handover or cell reselection does not occur. Typically, UE is not subject to strong interference from a neighboring AP (because N APs neighboring the UE are typically used as serving APs of the UE).

On the basis of the foregoing cell-free technology, optionally, the concept of a super cell is further introduced.

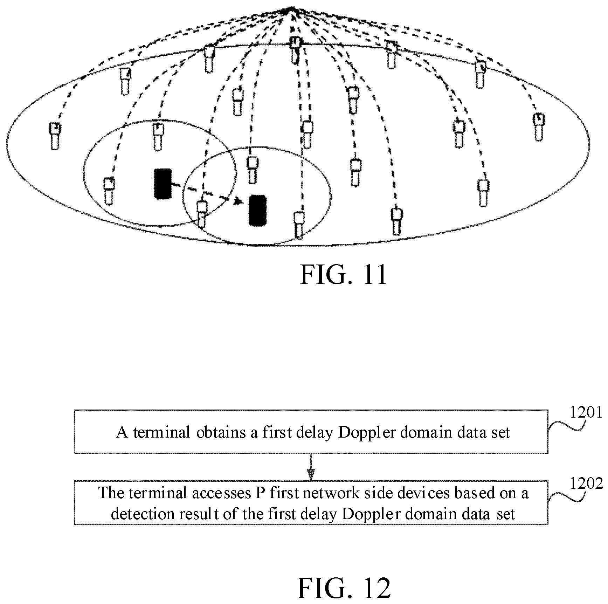

A network structure of the super cell is shown in FIG. 11. The super cell may be implemented by a plurality of TRPs or APs using a single-frequency network (Single-Frequency Network, SFN) transmission solution.

In an SFN transmission mode, the plurality of TRPs or APs send identical signals, there is no co-channel interference between different TRPs or APs, and the plurality of signals can improve the signal to interference plus noise ratio (Signal to Interference plus Noise Ratio, SINR), the transmission quality, and the coverage effect. The plurality of TRPs or APs that construct the SFN may share one cell ID, referred to as a super cell identity (super cell ID). The plurality of TRPs or APs may perform transmission of signals through SFN transmission. For example, each TRP or AP performs sending by using a wide beam, and a terminal may receive wide beams sent by the plurality of TRPs or AP are sent at a particular time, so as to obtain a diversity gain. In the SFN transmission solution, the terminal does not need to frequently perform cell reselection or handover between TRPs or APs.

In an implementation solution, UE performs mobility management or small packet sending and receiving through a super cell, and performs data transmission through one or more neighboring TRPs.

A core problem of the cell free is how to determine which TRPs or APs to dynamically serve terminal users a plurality of TRPs or APs. Currently, an initial access process of a terminal is used to implement selection and attachment of a TRP.

III. Basic process of terminal system access.

1. Initial search: including synchronization of synchronization signal blocks (Synchronization Signal Blocks, SSBs) and receipt of system information. Specifically, primary synchronization information (Primary Synchronization Signal, PSS) may be received first, then secondary synchronization information (Secondary Synchronization Signal, SSS) may be received, and then a physical broadcast channel (Physical Broadcast Channel, PBCH) may be received: an SSB index (index) and information in a PBCH demodulation reference signal (Demodulation reference signal, DMRS) and a master Information block (Master Information Block, MIB) are obtained.
2. Broadcast system information (system information, SI), including information required for accessing a system, is further received based on the obtained information.
3. Random access is performed based on the obtained information required for accessing the system.

The foregoing is the initial access process in an NR single base station cell. The UE receives only an SSB from a current cell, and obtains system information by using a synchronization signal (including a PSS and an SSS) in the detected SSB and a reference signal (DMRS) and data information (MIB) in the detected PBCH, so as to perform further random access by sending an uplink message. In the foregoing process, the pilots (the PSS and the SSS) used for synchronization are tightly coupled with the data part (content in the PBCH) that includes a system message.

The access method of the embodiments of this application is described in detail below with reference to the accompanying drawings.

Referring to FIG. 12, FIG. 12 is a flowchart of an access method according to an embodiment of this application. The access method of this embodiment of this application may be performed by a terminal.

As shown in FIG. 12, the access method provided in this embodiment of this application may include the following steps.

Step 1201: A terminal obtains a first delay Doppler domain data set, where the first delay Doppler domain data set is obtained by mapping N pilot signals on a resource location of a first delay Doppler domain resource block, and N is an integer greater than 1.

In this embodiment, the pilot signals may include, but are not limited to, pilot pulses, pilot sequences, or the like. It should be noted that, the N pilot signals may be the same or different. In a case that the N pilot signals are identical, the N pilot signals may be mapped to different resource locations of the first delay Doppler domain resource block, respectively, that is, the resource locations are orthogonal; In a case that the N pilot signals are different, the resource locations of the N pilot signals in the first delay Doppler domain resource block may be partially overlapped, fully overlapped (that is, the resource locations are the same), or orthogonal, which is not limited in this embodiment.

Specifically, the N pilot signals may correspond to N first network side devices, where the N first network side devices may be any of the following: different TRPs in cell free network; different TRPs in a same base station; different super cells in a cell-free network; different TRPs and super cells in a cell-free network; different cells; or different TRPs, and the like.

Step 1202: The terminal accesses P first network side devices based on a detection result of the first delay Doppler domain data set, where P is an integer less than or equal to N.

The P first network side devices are any of the following:

P first network side devices corresponding to P first resource locations, where the P first resource locations are P resource locations where peak values are detected on the first delay Doppler domain resource block; and

P first network side devices corresponding to P first pilot signals, where the P first pilot signals are P pilot signals where peak values are detected.

In this embodiment, the terminal may detect the first delay Doppler domain data set to obtain a detection result. For example, in a case that the pilot signals are pilot pulses, the terminal may perform power detection on the first delay Doppler domain data set to obtain a detection result; and in a case that the pilot signals are pilot sequences, the terminal may perform sequence correlation detection on the first delay Doppler domain data set to obtain a detection result.

The detection result may include a peak value, for example, an energy peak value or a power peak value, of the pilot signal obtained through detection. Optionally, the detection result may further include at least one of an SNR value, an RSRP value, a delay value, a Doppler value, or the like that are measured based on the pilot signal.

It should be noted that, the P first network side devices may include all of the first network side devices corresponding to all the resource locations where the peak values are detected; or may include part of first network side devices corresponding to all resource locations at which peak values are detected, for example, include only a first network side device corresponding to a resource location at which a maximum peak value is detected, or P first network side devices selected from the first network side devices corresponding to all the resource locations at which the peak values are detected based on obtain priori information, where the priori information may include, but is not limited to, at least one of a detection threshold, a delay threshold, a Doppler threshold, or a maximum number of network side devices to be accessed simultaneously that the terminal supports.

In an implementation, the pilot signal may be mapped to different resource locations of the first delay Doppler domain resource block, so that different first network side devices may be distinguished based on different resource locations. Specifically, the terminal device may perform detection on the resource locations, and in a case that a peak value is detected at a resource location, a first network side device corresponding to the resource location may be determined as a candidate network side device for access selection.

In another implementation, different pilot signals may be mapped to a same resource location of the first delay Doppler domain resource block, so that different first network side devices may be distinguished based on different pilot signals. Specifically, the terminal device may perform detection on the first delay Doppler domain resource block based on the pilot signals, and in a case that a peak value is detected based on a particular pilot signal, a first network side device corresponding to the pilot signal may be determined as a candidate network side device for access selection.

In another implementation, different pilot signals may be mapped to different resource locations of the first delay Doppler domain resource block, so that different first network side devices may be distinguished based on different pilot signals, or different first network side devices may be distinguished based on different resource locations. Specifically, the terminal device may perform detection on the resource locations of the first delay Doppler domain resource block based on the pilot signals, and in a case that a peak value is detected at a particular resource location based on a particular pilot signal, a first network side device corresponding to the pilot signal or the resource location may be determined as a candidate network side device for access selection.

In the access method in this embodiment of this application, the terminal may perform access selection based on the pilot signal separately sent by the first network side device, so that decoupling of a synchronization signal and system information in an SSB can be implemented, thereby reducing the resource overhead of initial access. In addition, the pilot signal selected by the first network side device is processed and sent by using an OTFS technology, so that the reliability of selection by the first network side device selection can be improved.

Optionally, the N pilot signals are: pilot pulses; or, pilot sequences.

In this embodiment, the pilot signals may be pilot pulses or pilot sequences. It should be noted that, in a case that the pilot signals are the pilot pulses, the N pilot signals may be identical pilot pulses. In a case that the pilot signals are the pilot sequences, the N pilot signals may be different pilot sequences, or may be identical pilot sequences.

Optionally, in a case that the N pilot signals are the pilot sequences, any of the following is satisfied:

resource locations to which the N pilot signals are mapped are orthogonal, the N pilot signals are identical pilot sequences, and the P first network side devices are P first network side devices corresponding to the P first resource locations;

resource locations to which the N pilot signals are mapped are orthogonal or partially overlapped, the N pilot signals are different pilot sequences, and the P first network side devices are P first network side devices corresponding to the P first resource locations or P first network side devices corresponding to the P first pilot signals; and

resource locations to which the N pilot signals are mapped are the same, the N pilot signals are different pilot sequences, and the P first network side devices are P first network side devices corresponding to the P first pilot signals.

In this embodiment, that the resource locations to which the N pilot signals are mapped are orthogonal may be understood as that the resource locations to which the N pilot signals are mapped are completely non-overlapped or different. That the resource locations to which the N pilot signals are mapped are the same may be understood as that the resource locations to which the N pilot signals are mapped are completely overlapped. That the N pilot signals are different pilot sequences may be understood as that the N pilot signals are orthogonal or quasi-orthogonal.

In an implementation, in a case that the N pilot signals are identical pilot sequences, the N pilot signals may be mapped to orthogonal resource locations in the first delay Doppler domain resource block, so that the terminal can distinguish different first network side devices based on the resource locations to which the N pilot signals are mapped. Correspondingly, in this case, the P first network side devices are P first network side devices corresponding to the P first resource locations. Optionally, a pilot guard band may be reserved between the orthogonal resource locations, so as to ensure that orthogonality can still be ensured at the receiving end after passing through the channel.

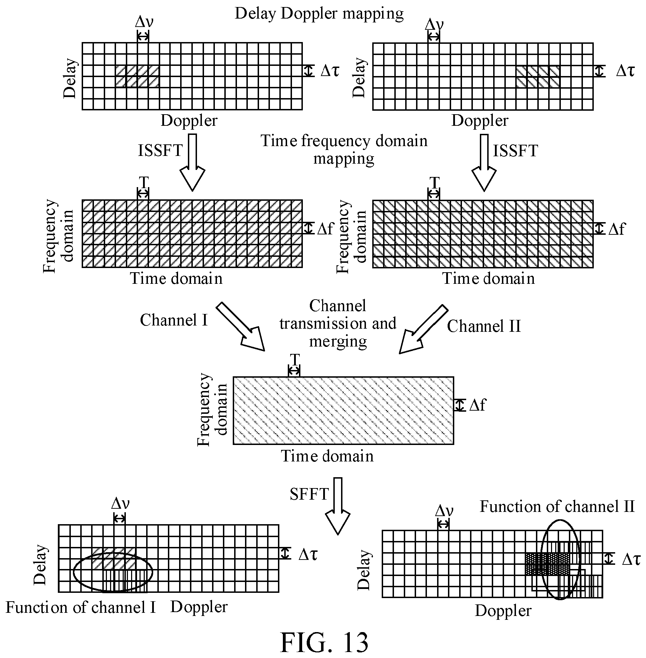

For example, as shown in FIG. 13, the N first network side devices include two TRPs, which are denoted as TRP_1 and TRP_2. TRP_1 and TRP_2 are spatially isolated, channels CH_1 (channel I in the figure) and CH_2 (channel II in the figure) from TRP_1 and TRP_2 to the terminal are independent of each other. TRP_1 and TRP_2 map pilot signals to orthogonal resource locations on a same delay Doppler domain resource block, that is, pilot signals sent by TRP_1 and TRP_2 on the same delay Doppler domain resource block are resource-orthogonal, and a pilot guard band is reserved to ensure that the orthogonality can still be ensured at the terminal side after passing through the channel. In an actual application, each TRP may map a pilot signal to a specific resource location to which the TRP belongs, and other remaining resource locations are left blank as a pilot guard band. It should be noted that, the pilot guard band may occupy only part of a delay Doppler (Delay Doppler, DD) domain lattice, that is, only part of DD domain resource blocks is occupied.

In another implementation, in a case that the N pilot signals are different pilot sequences, the N pilot signals may be mapped to a same resource location in the first delay Doppler domain resource block, so that the terminal can distinguish different first network side devices based on the pilot sequences. Correspondingly, in this case, the P first network side devices are P first network side devices corresponding to the P first resource locations. Optionally, a pilot guard band may be reserved between the N pilot signals, so as to ensure that orthogonality can still be ensured at the receiving end after passing through the channel.

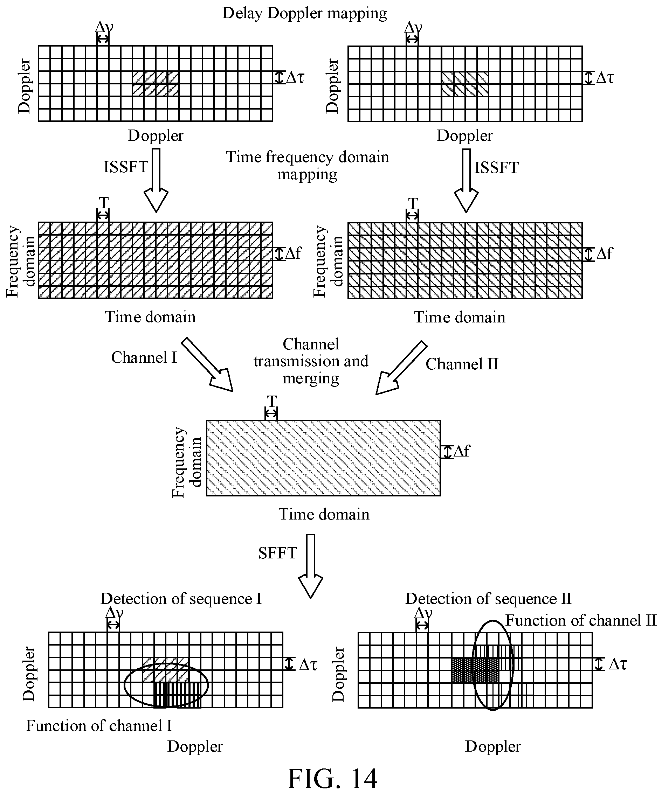

For example, as shown in FIG. 14, the N first network side devices include two TRPs, which are denoted as TRP_1 and TRP_2. Two TRPs send pilot sequences to a same terminal on a same resource block in the delay Doppler domain. TRP_1 and TRP_2 are spatially isolated, channels CH_1 (channel I in the figure) and CH_2 (channel II in the figure) from TRP_1 and TRP_2 to the terminal are independent of each other. The pilot sequences sent by TRP_1 and TRP_2 on the same resource block in the delay Doppler domain are orthogonal or quasi-orthogonal, and a pilot guard band is reserved to ensure that the orthogonality can still be ensured at the terminal side after passing through the channel. In an actual application, each TRP may map a pilot sequence to a specific resource location to which the TRP belongs, and other remaining resource locations are left blank as a pilot guard band. It should be noted that, the pilot guard band may occupy only part of a DD domain lattice, that is, only part of DD domain resource blocks is occupied.

In another implementation, in a case that the N pilot signals are different pilot sequences, the N pilot signals may be mapped to orthogonal resource locations in the first delay Doppler domain resource block, so that the terminal can distinguish different first network side devices based on the pilot sequences, or may distinguish different first network side devices based on the resource locations. Correspondingly, in this case, the P first network side devices may be P first network side devices corresponding to the P first resource locations, or may be P first network side devices corresponding to the P first pilot signals.

Optionally, in a case that the N pilot signals are the pilot pulses, the following is satisfied:

the terminal is temporally synchronous with N first network side devices corresponding to the N pilot signals;
the resource locations to which the N pilot signals are mapped are orthogonal; and
the P first network side devices are P first network side devices corresponding to the P first resource locations.

In this embodiment, that the terminal is temporally synchronous with the N first network side devices may include that the N first network side devices are temporally synchronous, and the terminal is temporally synchronous with each first network side device in the N first network side devices. In this case, the P first network side devices are P first network side devices corresponding to the P first resource locations.

That the resource locations to which the N pilot signals are mapped are orthogonal may be understood as that the resource locations to which the N pilot signals are mapped are completely non-overlapped or different. Optionally, a pilot guard band may be reserved between the orthogonal resource locations, so as to ensure that orthogonality can still be ensured at the receiving end after passing through the channel.

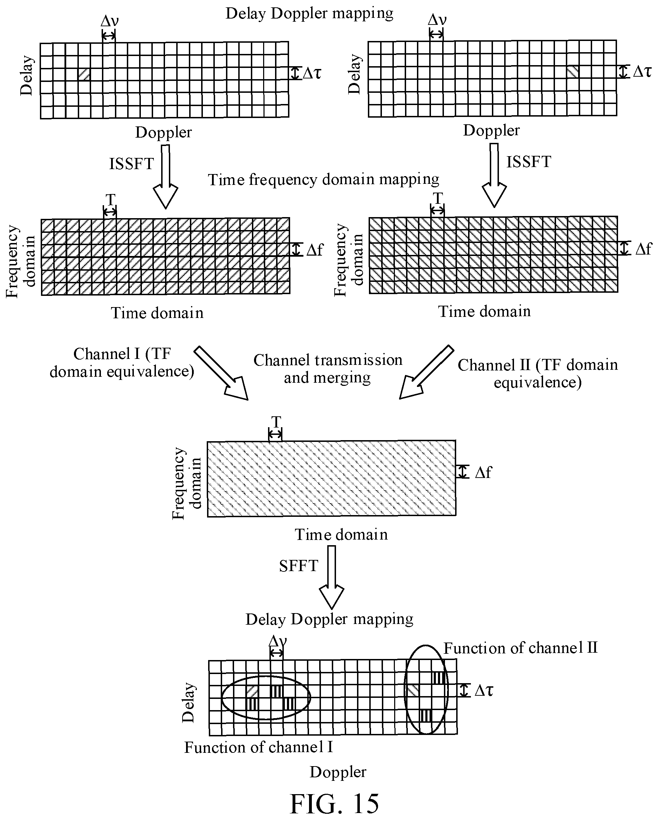

Specifically, in a case that the N pilot signals are the pilot pulses, the resource locations to which the N pilot signals are mapped are orthogonal. For example, as shown in FIG. 15, the N first network side devices include two TRPs, which are denoted as TRP_1 and TRP_2. TRP_1 and TRP_2 are spatially isolated, channels CH_1 (channel I in the figure) and CH_2 (channel II in the figure) from TRP_1 and TRP_2 to the terminal are independent of each other. Pilot signals sent by TRP_1 and TRP_2 on a same delay Doppler domain resource block are resource-orthogonal (the pilot resources of the two TRPs are respectively a DD domain lattice filled with left slants and a DD domain lattice filled with right slants in FIG. 15), and a pilot guard band is reserved to ensure that the orthogonality can still be ensured at the receiving end after passing through the channel. In an actual application, each TRP may map a pilot pulse to a specific resource location to which the TRP belongs, and other remaining resource locations are left blank as a pilot guard band. It should be noted that, the pilot guard band may occupy only part of a DD domain lattice, that is, only part of DD domain resource blocks is occupied.

In addition, in a case the N pilot signals are pilot pulses, the terminal needs to be ensured to be temporally synchronous with and the N first network side devices corresponding to the N pilot signals. Optionally, before receiving the N groups of time domain sampling points, the method may further include:

receiving, by the terminal, a timing synchronization signal sent by a second network side device, where the timing synchronization signal is used for time synchronization between the terminal and the N first network side devices corresponding to the N pilot signals.

The second network side device may be, for example, a super cell. The time synchronization may be, for example, frame timing synchronization. Specifically, after receiving the timing synchronization signal from the second network side device, the terminal may implement time synchronization with the N first network side devices based on the timing synchronization signal.

Optionally, in this embodiment, the obtaining of the timing synchronization signal and the selection and attachment of the first network side device in the initial access process may be decoupled. For example, the second network side device may send a timing synchronization signal, covering a wide area, which is only used for provide timing synchronization for the terminal, for example, frame timing synchronization, so that the terminal may select the first network side device based on step 1201 to step 1202 after obtaining the timing synchronization signal.

Optionally, the accessing, by the terminal, P first network side devices based on a detection result of the first delay Doppler domain data set includes:

performing detection, by the terminal, on the first delay Doppler domain data set based on first priori information, to obtain a detection result; and
accessing, by the terminal, P first network side devices based on the detection result and second priori information, where
in a case that the pilot signals are pilot pulses, the first priori information includes a resource location set, to which the pilot signals are mapped, on the first delay Doppler domain resource block, and in a case that the pilot signals are pilot sequences, the first priori information includes at least one of a resource location set, to which the pilot signals are mapped, on the first delay Doppler domain resource block and a pilot sequence set; and
the second priori information includes at least one of the following:

a target threshold, where the target threshold is used for characterizing a channel quality between the terminal and a network side device; and
a maximum number of network side devices to be accessed simultaneously that the terminal supports.

In this embodiment, the resource location set on the first delay Doppler domain resource block to which the pilot signals are mapped may indicate a set of delay Doppler (Delay Doppler, DD) domain sub-regions where the terminal needs to perform pilot signal detection, so that the terminal may perform pilot signal detection only on resource locations in the resource location set, that is, the terminal only needs to detect a limited number of sampling points, and further, the complexity of detection can be reduced.

The pilot sequence set may indicate a set of candidate pilot sequences that the first network side device may possibly send, so that the terminal may detect only candidate pilot sequences in the pilot sequence set, that is, only a limited number of candidate pilot sequences need to be detected, and further, the complexity of detection can be reduced.

The target threshold is used for characterizing a quality of a channel between the terminal and the network side device, that is, is used by the terminal to measure the quality of the channel between the terminal and the network side device. Optionally, the target threshold may include at least one of the following: a detection threshold; a delay threshold; or a Doppler threshold.

The detection threshold may include a signal noise ratio (Signal Noise Ratio, SNR) threshold, a reference signal received power (Reference Signal Receiving Power, RSRP) threshold, or the like. For example, the terminal may select a first network side device having an SNR value, an RSRP value, or the like, obtained based on the pilot signal measurement, greater than the detection threshold for attachment. For the delay threshold, for example, the terminal may select a first network side device having a delay value, obtained based on pilot signal measurement, less than the delay threshold for attachment. For the Doppler threshold, for example, the terminal may select a first network side device having a Doppler value, obtained based on pilot signal measurement, less than the Doppler threshold for attachment.

It should be noted that, in a case that the target threshold includes at least two of the detection threshold, the delay threshold, or the Doppler threshold, the terminal may select the first network side device in combination with a plurality of measurement indicators. For example, in a case that the target threshold includes the detection threshold, the delay threshold, and the Doppler threshold, the terminal may select a first network side device having an SNR value or RSRP value, obtained based on the pilot signal measurement, greater than the detection threshold, having a measured delay value less than the delay threshold, and having a measured Doppler value less than the first network side device of the Doppler threshold for attachment.

The maximum number of network side devices to be accessed simultaneously that the terminal supports is used for characterizing a maximum number of network side devices that the terminal can access, that is, a maximum number of network side devices that can simultaneously provide services for a same terminal.

It should be noted that, regardless of whether the pilot signals are pilot pulses or a pilot sequence, the second priori information may include at least one of a target threshold and a maximum number of network side devices to be accessed simultaneously that the terminal supports.

It should also be noted that, the first priori information and the second priori information may be pre-configured by a protocol, or may be configured by a third network side device. For example, the first priori information and the second priori information may be obtained by using a broadcast message of a super cell. In addition, in a case that the first priori information and the second priori information are configured by the third network side device, the first priori information and the second priori information may be configured by using a same message, or may be configured by using different messages.

In this embodiment of this application, the terminal detects the first delay Doppler domain data set based on the first priori information to obtain a detection result, which can reduce the detection complexity. In addition, the terminal accesses the P first network side devices based on the detection result and the second priori information, which can improve the reliability of the first network side device selected for access.

Optionally, the obtaining, by a terminal, a first delay Doppler domain data set includes:

receiving, by the terminal, a time domain sampling point set, where the time domain sampling point set is determined based on N second delay Doppler domain data sets, and each second delay Doppler domain data set is obtained by mapping one pilot signal on the first delay Doppler domain resource block; and

recovering, by the terminal, the first delay Doppler domain data set based on the time domain sampling point set.

In this embodiment, the time domain sampling point set may be a superposed signal of time domain sampling points sent by the N first network side devices. For the time domain sampling points sent by each first network side device, each first network side device may map one pilot signal to one resource location of the first delay Doppler domain resource block, to obtain a second delay Doppler domain data set corresponding to the delay Doppler domain resource block; Then, the first network side device transforms the second delay Doppler domain data set into a time frequency domain data set through ISSFT, and further converts the time frequency domain data set into time domain sampling points, to obtain time domain sampling points corresponding to the second delay Doppler domain data set.

Correspondingly, opposite to the signal processing direction of the first network side device, the terminal may first convert the time domain sampling point set into the time frequency domain data set, and then perform SFFT transform on the time frequency domain data set, to recover the first delay Doppler domain data set. It should be noted that, the first delay Doppler domain data set is placed on the first delay Doppler domain resource block. In addition, the first delay Doppler domain data set includes the N pilot signals respectively mapped to resource locations of the first delay Doppler domain resource block.

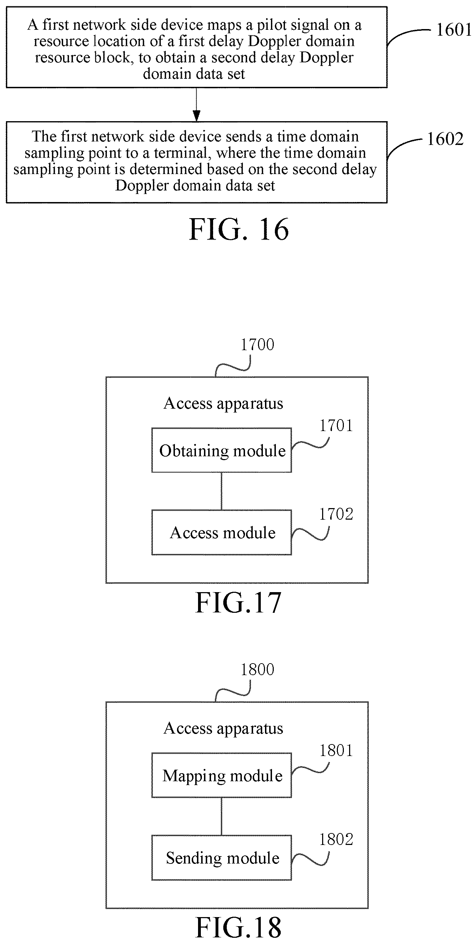

Referring to FIG. 16, FIG. 16 is a flowchart of an access method according to an embodiment of this application. The access method of this embodiment of this application is performed by a first network side device.

As shown in FIG. 16, the access method provided in this embodiment of this application may include the following steps.

Step 1601: A first network side device maps a pilot signal on a resource location of a first delay Doppler domain resource block, to obtain a second delay Doppler domain data set.

In this embodiment, the first pilot signal may be a pilot pulse or may be a pilot sequence.

Step 1602: The first network side device sends a time domain sampling point to a terminal, where the time domain sampling point is determined based on the second delay Doppler domain data set.

In this embodiment, the first network side device may transform the second delay Doppler domain data set into a time frequency domain resource set through ISSFT on the second delay Doppler domain data set, and further convert the time frequency domain resource set into time domain sampling points, and send the time domain resource sets to the terminal.

In the access method in this embodiment of this application, the first network side device may separately send the selected pilot signal to the terminal, so that decoupling of a synchronization signal and system information in an SSB can be implemented, thereby reducing the resource overhead of initial access. In addition, the first network side device may process and send the selected pilot signal by using an OTFS technology, so that the reliability of selection by the first network side device can be improved.

Optionally, the pilot signal is: a pilot pulse; or, a pilot sequence.

For an implementation of this embodiment, reference may be made to related descriptions of this embodiment shown in FIG. 12, which is not described in detail herein.

Optionally, in a case that the pilot signal is the pilot pulse, the first network side device is temporally synchronous with the terminal.

For an implementation of this embodiment, reference may be made to related descriptions of this embodiment shown in FIG. 12, which is not described in detail herein.

It should be noted that, this embodiment serves as an embodiment of the network side device corresponding to the method embodiment of FIG. 12, and therefore, reference may be made to related descriptions in the method embodiment of FIG. 12; and in addition, the same beneficial effect can be achieved, and details are not described again herein in order to avoid duplication.

It should be noted that, the various optional implementations introduced in the embodiments of this application may be implemented in combination with each other, or may be implemented separately, which is not limited in the embodiments of this application.

For ease of understanding, descriptions are provided with reference to the examples.

Example 1: The pilot pulses are identical, and the TRPs are distinguished by using different mapping locations of the pilot pulses.

For example, as shown in FIG. 15, the N first network side devices include two TRPs, which are denoted as TRP_1 and TRP_2. TRP_1 and TRP_2 are spatially isolated, channels CH_1 (channel I in the figure) and CH_2 (channel II in the figure) from TRP_1 and TRP_2 to the terminal are independent of each other. Pilot signals sent by TRP_1 and TRP_2 on a same delay Doppler domain resource block are resource-orthogonal (the pilot resources of the two TRPs are respectively a DD domain lattice filled with left slants and a DD domain lattice filled with right slants in FIG. 15), and a pilot guard band is reserved to ensure that the orthogonality can still be ensured at the receiving end after passing through the channel. In an actual application, each TRP may map a pilot pulse to a specific resource location to which the TRP belongs, and other remaining resource locations are left blank, for example, as a pilot guard band. It should be noted that, the pilot guard band may occupy only part of a DD domain lattice, that is, only part of DD domain resource blocks is occupied. After mapping of the pilot pulses to the resource locations on the delay Doppler domain resource block is completed, each TRP may transform a symbol of the delay Doppler domain into a time frequency domain through ISSFT, further convert the time frequency domain into time domain sampling points, and send the time domain sampling points.

At the receiving side, that is, at the terminal side, the terminal may restore the received time domain sampling points to the time frequency domain, to obtain a sum signal of a signal obtained from a signal that is sent by TRP_1 and has gone through CH_1 and a signal obtained from a signal that is sent by TRP_2 and has gone through CH_2, which cannot be distinguished in the time frequency domain. Therefore, the terminal may perform SFFT transform on the sum signal and restore the sum signal to the delay Doppler domain, so as to obtain the received signal in the delay Doppler domain shown in the lowest part of FIG. 15. Although under the action of the multi-path channel, delays and Doppler shifts appear on a delay Doppler map at the terminal side for the pilot pulses, a pilot pulse corresponding to each TRP on the delay Doppler map of the terminal side is always located in a specific sub-region to which the pilot pulse is mapped by the TRP no matter what delay Doppler response the pilot pulse has gone through in the channel, because the pilot guard band is reserved and the size of the pilot guard band can completely cover a maximum delay and Doppler spread of the channel between the TRPs and the terminal, so that the terminal can correctly determine, through power detection, an initial region to which the pilot pulse is mapped, so as to correctly distinguish TRP information indicated by the location of the pilot pulse.

Correspondingly, the terminal may select, based on priori information of a pilot mapping location and in combination with signal power measurement of the terminal for mapping sub-regions (that is, the specific sub-region to which the pilot pulse is mapped), an appropriate TRP to perform a subsequent uplink or random access process.

It should be noted that, in this example, the TRPs are temporally synchronous, and the terminal is temporally synchronous with the TRPs. Time synchronization (for example, frame timing synchronization) of the UE may be obtained in advance by using other signals sent by the super cell. Optionally, the obtaining of the timing synchronization signal may be decoupled, in a manner different from the NR, from the selection and attachment of the TRP in the initial access. For example, the super cell sends a timing synchronization signal for wide-area coverage, which is only used for providing frame timing synchronization for the terminal. After the UE obtains the timing synchronization signal, the UE performs TRP selection using the foregoing method.

In order to reduce the complexity of the terminal detection, the terminal may obtain priori information about the pilot configuration. The priori information may be pre-configured by the protocol or obtained by using a message broadcast by the super cell. Specifically, the priori information of the pilot configuration, that is, the pilot configuration information, may include at least one of the fields shown in Table 1.

Table 1 Pilot configuration information

| Measurement threshold | Maximum number of TRP connections | Pilot mapping location set | ... |
|---|---|---|---|

In Table 1, the measurement threshold is the foregoing target threshold. For specific content, reference may be made to related descriptions of the target threshold, and details are not described herein again.

The maximum number of TRP connections is the maximum number of network side devices to be simultaneously accessed that the terminal supports. For specific content, reference may be made to related descriptions of the maximum number of network side devices to be simultaneously accessed that the terminal supports, and details are not described herein again.

For the pilot mapping location set, that is, the resource location set on the first delay Doppler domain resource block to which the pilot signals are mapped, for specific content, reference may be referred to the related descriptions of the resource location set on the first delay Doppler domain resource block to which the pilot signals are mapped, and details are not described herein again.

Optionally, the foregoing pilot configuration information may further include some general configuration parameters that are independent of the delay Doppler domain, for example, information such as a pilot period, a frequency band where the pilot is located, and a measurement window configuration.

Example 2: The pilot sequences are identical, and the TRPs are distinguished by using different mapping locations of the pilot sequences.

For example, as shown in FIG. 13, the N first network side devices include two TRPs, which are denoted as TRP_1 and TRP_2. TRP_1 and TRP_2 are spatially isolated, channels CH_1 and CH_2 from TRP_1 and TRP_2 to the terminal are independent of each other. TRP_1 and TRP_2 map pilot sequences to orthogonal resource locations on a same delay Doppler domain resource block, that is, pilot sequences sent by TRP_1 and TRP_2 on the same delay Doppler domain resource block are resource-orthogonal, and a pilot guard band is reserved to ensure that the orthogonality can still be ensured at the terminal side after passing through the channel. Each TRP may map a pilot signal to a specific resource location to which the TRP belongs, and other remaining resource locations are left blank, for example, as a pilot guard band. It should be noted that, the pilot guard band may occupy only part of a DD domain lattice. After TRP_1 and TRP_2 complete mapping of the pilot sequences to the resource blocks in the delay Doppler domain, each TRP transforms a symbol of the delay Doppler domain into a time frequency domain through ISSFT, further converts the time frequency domain into time domain sampling points, and sends the time domain sampling points.

At the receiving side, that is, at the terminal side, the terminal may restore the received time domain sampling points to the time frequency domain, to obtain a sum signal of a signal obtained from a signal that is sent by TRP_1 and has gone through CH_1 and a signal obtained from a signal that is sent by TRP_2 and has gone through CH_2, which cannot be distinguished in the time frequency domain. Therefore, the terminal performs SFFT transform on the sum signal and restores the sum signal to the delay Doppler domain, so as to obtain the received signal in the delay Doppler domain shown in the lowest part of FIG. 13. Although under the action of the multi-path channel, delays and Doppler shifts appear on a delay Doppler map at the terminal for the pilots, a pilot sequence corresponding to each TRP on the delay Doppler map of the terminal side is always located in a specific sub-region to which the pilot sequence is mapped by the TRP no matter what delay Doppler response the pilot has gone through in the channel, because the pilot guard band is reserved and the size of the pilot guard band can completely cover a maximum delay and Doppler spread of the channel between the TRPs and the terminal, so that the terminal can correctly determine, through pilot sequence detection, an initial region to which the pilot sequence is mapped, so as to correctly distinguish TRP information indicated by the location of the pilot sequence.

Correspondingly, the terminal may select, based on priori information of a pilot mapping location and in combination with signal power measurement of the terminal for mapping sub-regions (that is, the specific sub-region to which the pilot sequence is mapped), an appropriate TRP to perform a subsequent uplink access process.

It should be noted that, advance time synchronization between TRPs is not required in this example. The UE may obtain time synchronization through detection based on a delay Doppler domain sequence.

In order to reduce the complexity of the terminal detection, the terminal may obtain priori information about the pilot configuration. The priori information may be pre-configured by the protocol or obtained by using a message broadcast by the super cell. Specifically, the priori information of the pilot configuration, that is, the pilot configuration information, may include at least one of the fields shown in Table 2.

Table 2 Pilot configuration information

| Measurement threshold | Maximum number of TRP connections | Pilot mapping location set | ... |
|---|---|---|---|

In Table 2, the measurement threshold is the foregoing target threshold. For specific content, reference may be made to related descriptions of the target threshold, and details are not described herein again.

The maximum number of TRP connections is the maximum number of network side devices to be simultaneously accessed that the terminal supports. For specific content, reference may be made to related descriptions of the maximum number of network side devices to be simultaneously accessed that the terminal supports, and details are not described herein again.

For the pilot mapping location set, that is, the resource location set on the first delay Doppler domain resource block to which the pilot signals are mapped, for specific content, reference may be referred to the related descriptions of the resource location set on the first delay Doppler domain resource block to which the pilot signals are mapped, and details are not described herein again.

Optionally, the foregoing pilot configuration information may further include some general configuration parameters that are independent of the delay Doppler domain, for example, information such as a pilot period, a frequency band where the pilot is located, and a measurement window configuration.

Example 3: Pilot sequence mapping locations are the same, and the TRPs are distinguished by using different pilot sequences.

For example, as shown in FIG. 14, the N first network side devices include two TRPs, which are denoted as TRP_1 and TRP_2. Two TRPs send pilot sequences to a same terminal on a same resource block in the delay Doppler domain. TRP_1 and TRP_2 are spatially isolated, channels CH_1 and CH_2 from TRP_1 and TRP_2 to the terminal are independent of each other. The pilot sequences sent by TRP_1 and TRP_2 on the same resource block in the delay Doppler domain are orthogonal or quasi-orthogonal, and a pilot guard band is reserved to ensure that the orthogonality can still be ensured at the terminal side after passing through the channel. As shown in FIG. 14, each TRP maps a pilot sequence at a specific resource location to which the TRP belongs, and other remaining resource locations are left blank, for example, as a pilot guard band. It should be noted that, the pilot guard band may occupy only part of a DD domain lattice. After mapping of the pilot sequences to the resource blocks in the delay Doppler domain is completed, each TRP may transform a symbol of the delay Doppler domain into a time frequency domain through ISSFT, further converts the time frequency domain into time domain sampling points, and sends the time domain sampling points.

At the receiving side, that is, at the terminal side, the terminal restores the received time domain sampling points to the time frequency domain, to obtain a sum signal of a signal obtained from a signal that is sent by TRP_1 and has gone through CH_1 and a signal obtained from a signal that is sent by TRP_2 and has gone through CH_2, which cannot be distinguished in the time frequency domain. Therefore, the terminal may perform SFFT transform on the sum signal and restores the sum signal to the delay Doppler domain, so as to obtain the received signal in the delay Doppler domain shown in the lowest part of FIG. 14. Under the action of the multi-path channel, delays and Doppler shifts appear on a delay Doppler map at the terminal side for the pilot sequence, the terminal may perform pilot sequence detection a plurality of times on received sample points by use a known pilot sequence. In a case that a transmission signal includes a pilot sequence corresponding to a particular TRP and the terminal selects the pilot to perform detection, a peak value can be observed on the delay Doppler map obtained by using a detection algorithm (the peak value cannot be observed through other pilot detection), so that the TRP information indicated by the pilot sequence can be correctly distinguished.

Correspondingly, the terminal may select, based on priori information of a pilot mapping location and in combination with signal power measurement of the terminal for mapping sub-regions, an appropriate TRP to perform a subsequent uplink access process.

It should be noted that, advance time synchronization between TRPs is not required in this example. The UE may obtain time synchronization through detection based on a delay Doppler domain sequence.

In order to reduce the complexity of the terminal detection, the terminal may obtain priori information about the pilot configuration. The priori information may be pre-configured by the protocol or obtained by using a message broadcast by the super cell. Specifically, the priori information of the pilot configuration, that is, the pilot configuration information, may include at least one of the fields shown in Table 2.

Table 3 Pilot configuration information

| Measurement threshold | Maximum number of TRP connections | pilot sequence set | ... |
|---|---|---|---|

In Table 3, the measurement threshold is the foregoing target threshold. For specific content, reference may be made to related descriptions of the target threshold, and details are not described herein again.

The maximum number of TRP connections is the maximum number of network side devices to be simultaneously accessed that the terminal supports. For specific content, reference may be made to related descriptions of the maximum number of network side devices to be simultaneously accessed that the terminal supports, and details are not described herein again.

For the pilot sequence set, reference may be made to the related descriptions of the pilot sequence set, and details are not described herein again.

Optionally, the foregoing pilot configuration information may further include some general configuration parameters that are independent of the delay Doppler domain, for example, information such as a pilot period, a frequency band where the pilot is located, and a measurement window configuration.

Example 4: TRPs are distinguished by using different pilot sequences and different mapping locations.

In this example, different pilot sequences may be understood as that pilots used by different TRPs are orthogonal or quasi-orthogonal to each other. Different pilot mapping locations may be understood as that not all the resources occupied by pilot signals of different TRPs on the delay Doppler domain resource block are the same, for example, the resources occupied by pilot signals of different TRPs on the delay Doppler domain resource block are orthogonal, that is, the resources occupied by pilots used by different TRPs do not overlap; or the resources occupied by pilots used by different TRPs partially overlap.

It should be noted that, for related processing of the sending side and the receiving side, reference may be made to related descriptions in Example 3, and details are not described herein again. In addition, the priori information of the pilot configuration in this example may include at least one of the fields shown in Table 4.

Table 4 Pilot configuration information

| Measurement threshold | Maximum number of TRP connections | pilot sequence set | Pilot mapping location set |
|---|---|---|---|

In Table 4, the measurement threshold is the foregoing target threshold. For specific content, reference may be made to related descriptions of the target threshold, and details are not described herein again.

The maximum number of TRP connections is the maximum number of network side devices to be simultaneously accessed that the terminal supports. For specific content, reference may be made to related descriptions of the maximum number of network side devices to be simultaneously accessed that the terminal supports, and details are not described herein again.

For the pilot sequence set, reference may be made to the related descriptions of the pilot sequence set, and details are not described herein again.

For the pilot mapping location set, that is, the resource location set on the first delay Doppler domain resource block to which the pilot signals are mapped, for specific content, reference may be referred to the related descriptions of the resource location set on the first delay Doppler domain resource block to which the pilot signals are mapped, and details are not described herein again.

Optionally, the foregoing pilot configuration information may further include some general configuration parameters that are independent of the delay Doppler domain, for example, information such as a pilot period, a frequency band where the pilot is located, and a measurement window configuration.

It should be noted that, the execution body of the access method provided in this embodiment of this application may be an access apparatus, or, a control module, in the access apparatus, for executing the access method. In this embodiment of this application, an example in which the access apparatus executes the access method is used to describe the access apparatus provided in this embodiment of this application.

Referring to FIG. 17, FIG. 17 is a structural diagram of an access apparatus according to an embodiment of this application.

As shown in FIG. 17, the access apparatus 1700 includes:

an obtaining module 1701, configured to obtain a first delay Doppler domain data set, where the first delay Doppler domain data set is obtained by mapping N pilot signals on a resource location of a first delay Doppler domain resource block, and N is an integer greater than 1;

an access module 1702, configured to access P first network side devices based on a detection result of the first delay Doppler domain data set, where P is an integer less than or equal to N; and

the P first network side devices are any of the following:

P first network side devices corresponding to P first resource locations, where the P first resource locations are P resource locations where peak values are detected on the first delay Doppler domain resource block; and

P first network side devices corresponding to P first pilot signals, where the P first pilot signals are P pilot signals where peak values are detected.

Optionally, the N pilot signals are: pilot pulses; or, pilot sequences.

Optionally, in a case that the N pilot signals are the pilot sequences, any of the following is satisfied:

resource locations to which the N pilot signals are mapped are orthogonal, the N pilot signals are identical pilot sequences, and the P first network side devices are P first network side devices corresponding to the P first resource locations;

resource locations to which the N pilot signals are mapped are orthogonal or partially overlapped, the N pilot signals are different pilot sequences, and the P first network side devices are P first network side devices corresponding to the P first resource locations or P first network side devices corresponding to the P first pilot signals; and

resource locations to which the N pilot signals are mapped are the same, the N pilot signals are different pilot sequences, and the P first network side devices are P first network side devices corresponding to the P first pilot signals.

Optionally, in a case that the N pilot signals are the pilot pulses, the following is satisfied:

the terminal is temporally synchronous with N first network side devices corresponding to the N pilot signals;

the resource locations to which the N pilot signals are mapped are orthogonal; and

the P first network side devices are P first network side devices corresponding to the P first resource locations.

Optionally, the access module includes:

a detection unit, configured to perform detection on the first delay Doppler domain data set based on first priori information, to obtain a detection result; and

an access unit, configured to access P first network side devices based on the detection result and second priori information, where

in a case that the pilot signals are pilot pulses, the first priori information includes a resource location set, to which the pilot signals are mapped, on the first delay Doppler domain resource block, and in a case that the pilot signals are pilot sequences, the first priori information includes at least one of a resource location set, to which the pilot signals are mapped, on the first delay Doppler domain resource block and a pilot sequence set; and

the second priori information includes at least one of the following:

a target threshold, where the target threshold is used for characterizing a channel quality between the terminal and a network side device; and

a maximum number of network side devices to be accessed simultaneously that the terminal supports.

Optionally, the target threshold includes at least one of the following: a detection threshold; a delay threshold; or a Doppler threshold.

Optionally, the obtaining module includes:

a receiving unit, configured to receive a time domain sampling point set, where the time domain sampling point set is determined based on N second delay Doppler domain data sets, and each second delay Doppler domain data set is obtained by mapping one pilot signal on the first delay Doppler domain resource block; and

a recovering unit, configured to recover the first delay Doppler domain data set based on the time domain sampling point set.

The access apparatus in this embodiment of this application may be an apparatus, or may be a component, an integrated circuit, or a chip in a terminal. The apparatus may be a mobile terminal or a non-mobile terminal. Exemplarily, the mobile terminal may include, but is not limited to, the types of the terminal 11 listed above, and the non-mobile terminal may be a server, a network attached storage (Network Attached Storage, NAS), a personal computer (personal computer, PC), a television (television, TV), an automatic teller machine, a self-service machine, or the like, which are not specifically limited in this embodiment of this application.

The access apparatus in this embodiment of this application may be an apparatus having an operating system. The operating system may be an Android (Android) operating system, may be an ios operating system, or may be another possible operating system, which is not specifically limited in this embodiment of this application.

An access apparatus 1700 provided in this embodiment of this application can implement the processes implemented in the method embodiment of FIG. 12, and in addition, the same technical effect can be achieved, which are not repeated herein in order to avoid duplication.

It should be noted that, the execution body of the access method provided in this embodiment of this application may be an access apparatus, or, a control module, in the access apparatus, for executing the access method. In this embodiment of this application, an example in which the access apparatus executes the access method is used to describe the access apparatus provided in this embodiment of this application.

Referring to FIG. 18, FIG. 18 is a structural diagram of an access apparatus according to an embodiment of this application.

As shown in FIG. 18, the access apparatus 1800 includes:

a mapping module 1801, configured to map a pilot signal on a resource location of a first delay Doppler domain resource block, to obtain a second delay Doppler domain data set; and

a sending module 1802, configured to send a time domain sampling point to a terminal, where the time domain sampling point is determined based on the second delay Doppler domain data set.

Optionally, the pilot signal is: a pilot pulse; or, a pilot sequence.

Optionally, in a case that the pilot signal is the pilot pulse, the first network side device is temporally synchronous with the terminal.

The access apparatus in this embodiment of this application may be an apparatus, or may be a component, an integrated circuit, or a chip in a network side device. The network side device may include but is not limited to the type of the network side device 12 listed above, which is not specifically limited in this embodiment of this application.

An access apparatus 1800 provided in this embodiment of this application can implement the processes implemented in the method embodiment of FIG. 16, and in addition, the same technical effect can be achieved, which are not repeated herein in order to avoid duplication.

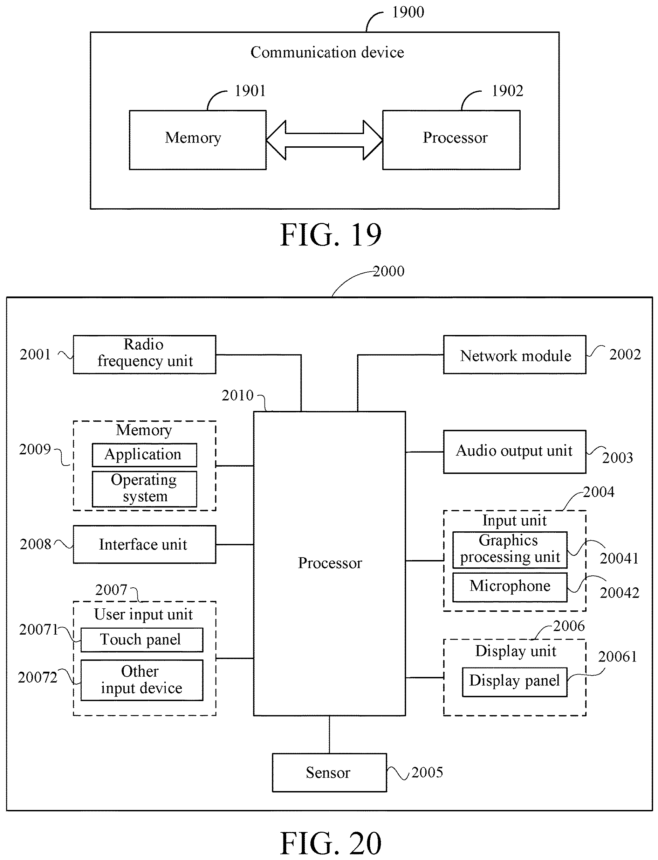

Optionally, as shown in FIG. 19, an embodiment of this application further provides a communication device 1900, including a processor 1902, a memory 1901, a program or instructions stored on the memory 1901 and capable of being run on the processor 1902. For example, in a case that the communication device 1900 is a terminal, when the program or the instructions are executed by the processor 1902, the processes of the foregoing method embodiment in FIG. 12 are implemented, and in addition, the same technical effect can be achieved. In a case that the communication device 1900 is a network side device, when the program or the instructions are executed by the processor 1902, the processes of the foregoing method embodiment in FIG. 16 are implemented, and in addition, the same technical effect can be achieved, which are not repeated herein in order to avoid duplication.

FIG. 20 is a schematic diagram of a hardware structure of a terminal for implementing an embodiment of this application.

The terminal 2000 includes, but is not limited to, components such as a radio frequency unit 2001, a network module 2002, an audio output unit 2003, an input unit 2004, a sensor 2005, a display unit 2006, a user input unit 2007, an interface unit 2008, a memory 2009, and a processor 2010.

It may be understood by those skilled in the art that the terminal 2000 may further include a power supply (for example, a battery) for supplying power to various components, and the power supply may be logically connected to the processor 2010 through a power management system, so as to implement functions such as managing charging or discharging, and power consumption management through the power management system. The terminal structure shown in FIG. 20 does not constitute a limitation to the terminal, and the terminal may include more or fewer components than illustrated, or a combination of specific components, or arrangement of different components, and details are not described again herein.

It should be understood that, in this embodiment of this application, the input unit 2004 may include a graphics processing unit (Graphics Processing Unit, GPU) 20041 and a microphone 20042. The graphics processing unit 20041 performs processing on image data of a static picture or a video that is obtained by an image acquisition apparatus (for example, a camera lens) in a video capture mode or an image capture mode. The display unit 2006 may include a display panel 20061. The display panel 20061 may be configured in a form of a liquid crystal display, an organic light-emitting diode, or the like. The user input unit 2007 includes a touch panel 20071 and another input device 20072. The touch panel 20071 is also referred to as a touchscreen. The touch panel 20071 may include two parts: a touch detection apparatus and a touch controller. The another input device 20072 may include, but is not limited to, a physical keyboard, a functional key (such as a volume control key and a switch key), a trackball, a mouse, and a joystick, and details are not described again herein.

In this embodiment of this application, the radio frequency unit 2001 receives downlink data from a network side device and then sends the information to the processor 2010 for processing. In addition, the uplink data is sent to the network side device. Generally, the radio frequency unit 2001 includes, but is not limited to, an antenna, at least one amplifier, a transceiver, a coupler, a low noise amplifier, a duplexer, or the like.

The memory 2009 may be configured to store a software program or instructions, and various data. The memory 2009 may mainly include a storage program or instruction area and a storage data area, where the storage program or instruction area may store an operating system, an application program or instructions required for at least one function (for example, a sound playback function, and an image playback function). In addition, the memory 2009 may include a high-speed random access memory, and may further include a non-volatile memory, where the non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage device, flash memory device, or other non-volatile solid-state storage device.

The processor 2010 may include one or more processing units. Optionally, the processor 2010 may integrate an application processor and a modem processor, where the application processor mainly processes an operating system, a user interface, an application program, or instructions, and the modem processor mainly processes radio communication, for example, a base-band processor. It may be understood that the foregoing modem processor may not be integrated into the processor 2010.

The processor 2010 is configured to obtain a first delay Doppler domain data set, where the first delay Doppler domain data set is obtained by mapping N pilot signals on a resource location of a first delay Doppler domain resource block, and N is an integer greater than 1; and

the radio frequency unit 2001 is configured to access P first network side devices based on a detection result of the first delay Doppler domain data set, where P is an integer less than or equal to N; and
the P first network side devices are any of the following:

P first network side devices corresponding to P first resource locations, where the P first resource locations are P resource locations where peak values are detected on the first delay Doppler domain resource block; and
P first network side devices corresponding to P first pilot signals, where the P first pilot signals are P pilot signals where peak values are detected.

Optionally, the N pilot signals are: pilot pulses; or, pilot sequences.

Optionally, in a case that the N pilot signals are the pilot sequences, any of the following is satisfied:

resource locations to which the N pilot signals are mapped are orthogonal, the N pilot signals are identical pilot sequences, and the P first network side devices are P first network side devices corresponding to the P first resource locations;
resource locations to which the N pilot signals are mapped are orthogonal or partially overlapped, the N pilot signals are different pilot sequences, and the P first network side devices are P first network side devices corresponding to the P first resource locations or P first network side devices corresponding to the P first pilot signals; and
resource locations to which the N pilot signals are mapped are the same, the N pilot signals are different pilot sequences, and the P first network side devices are P first network side devices corresponding to the P first pilot signals.

Optionally, in a case that the N pilot signals are the pilot pulses, the following is satisfied:

the terminal is temporally synchronous with N first network side devices corresponding to the N pilot signals;
the resource locations to which the N pilot signals are mapped are orthogonal; and
the P first network side devices are P first network side devices corresponding to the P first resource locations.

Optionally, the radio frequency unit 2001 is further configured to:

perform detection on the first delay Doppler domain data set based on first priori information, to obtain a detection result; and
access P first network side devices based on the detection result and second priori information, where
in a case that the pilot signals are pilot pulses, the first priori information includes a resource location set, to which the pilot signals are mapped, on the first delay Doppler domain resource block, and in a case that the pilot signals are pilot sequences, the first priori information includes at least one of a resource location set, to which the pilot signals are mapped, on the first delay Doppler domain resource block and a pilot sequence set; and
the second priori information includes at least one of the following:

a target threshold, where the target threshold is used for characterizing a channel quality between the terminal and a network side device; and
a maximum number of network side devices to be accessed simultaneously that the terminal supports.

Optionally, the target threshold includes at least one of the following: a detection threshold; a delay threshold; or a Doppler threshold.

Optionally, the radio frequency unit 2001 is further configured to receive a time domain sampling point set, where the time domain sampling point set is determined based on N second delay Doppler domain data sets, and each second delay Doppler domain data set is obtained by mapping one pilot signal on the first delay Doppler domain resource block; and

the processor 2010 is further configured to recover the first delay Doppler domain data set based on the time domain sampling point set.

It should be noted that, in this embodiment, the terminal 2000 may implement the processes in the method embodiment in FIG. 12 in the embodiments of this application, and in addition, the same beneficial effect can be achieved, which are not repeated herein in order to avoid duplication.

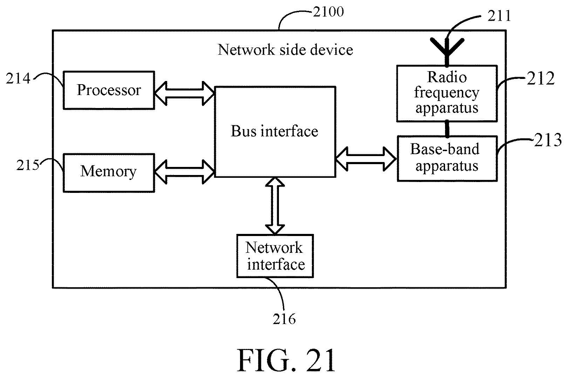

Specifically, an embodiment of this application further provides a network side device. As shown in FIG. 21, a network device 2100 includes: an antenna 211, a radio frequency apparatus 212, and a base-band apparatus 213. The antenna 211 is connected to the radio frequency apparatus 212. In an uplink direction, the radio frequency apparatus 212 receives information through the antenna 211, and sends the received information to the base-band apparatus 213 for processing. In a downlink direction, the base-band apparatus 213 processes information to be sent and sends the information to the radio frequency apparatus 212, and the radio frequency apparatus 212 processes the received information and sends the information through the antenna 211.

The frequency band processing apparatus may be located in the base-band apparatus 213, the method performed by the network side device in the foregoing embodiments may be implemented in the base-band apparatus 213, and the base-band apparatus 213 includes a processor 214 and a memory 215.

For example, the base-band apparatus 213 may include at least one base-band board, and the base-band board is provided with a plurality of chips. As shown in FIG. 21, one of the chips is, for example, a processor 214, and is connected to the memory 215, to invoke a program in the memory 215 to perform an operation of a network device in the foregoing method embodiment.

The base-band apparatus 213 may also include a network interface 216 for information exchange with the radio frequency apparatus 212, and the interface is, for example, a common public radio interface (common public radio interface, CPRI for short).

Specifically, the network side device in this embodiment of this application further includes: instructions or a program stored on the memory 215 and capable of running on the processor 214. The processor 214 invokes the instructions or the program in the memory 215 to perform the processes in the method embodiment in FIG. 16, and in addition, the same technical effect can be achieved, which are not repeated herein in order to avoid duplication.

An embodiment of this application further provides a computer-readable storage medium, storing a computer program, where when the computer program is executed by a processor, the processes of the foregoing embodiments of the access method are implemented, and in addition, the same technical effect can be achieved, which are not repeated herein in order to avoid duplication. The computer-readable storage medium may include, for example, a read-only memory (Read-Only Memory, ROM), a random access memory (Random Access Memory, RAM), a magnetic disk, or an optical disc.

An embodiment of this application further provides a readable storage medium. The readable storage medium stores a program or instructions. The program or instructions, when executed by a processor, cause the processor to perform the processes of the foregoing method embodiment in FIG. 12 or FIG. 16, and in addition, the same technical effect can be achieved, which are not repeated herein in order to avoid duplication.

The processor is the processor in the terminal described in the foregoing embodiment. The readable storage medium includes a computer-readable storage medium, for example, a computer read-only memory (Read-Only Memory, ROM), a random access memory (Random Access Memory, RAM), a disk, or an optical disk.

An embodiment of this application further provides a chip. The chip includes a processor and a communication interface. The communication interface is coupled to the processor. The processor is configured to run a network side device program or instructions to implement the processes of the foregoing method embodiment of FIG. 12 or FIG. 16, and in addition, the same technical effect can be achieved, which are not repeated herein in order to avoid duplication.

It should be understood that the chip mentioned in this embodiment of this application may also be referred to as a system on chip, a system chip, a chip system, or a system-on-a-chip.

It should be noted that, the terms "include", "comprise", or any other variation thereof in this specification is intended to cover a non-exclusive inclusion, so that the stated processes, methods, objects, or apparatuses including a series of elements not only include those elements, but also include other elements not explicitly listed, or further include elements inherent to such the processes, methods, objects, or apparatuses. Without more limitations, elements defined by the sentence "including one" does not exclude that there are still other same elements in the processes, methods, objects, or apparatuses. In addition, it should be noted that the scope of the methods and apparatuses in the embodiments of this application is not limited to performing functions in the order shown or discussed, and may further include performing functions in a substantially simultaneous manner or in a reverse order according to the functions involved, for example, the described methods may be performed in an order different from the order described, and various steps may be added, omitted, or combined. In addition, the features described with reference to some examples can be combined in other examples.

According to the descriptions in the foregoing implementations, a person skilled in the art may clearly learn that the method according to the foregoing embodiments may be implemented by relying on software and a commodity hardware platform or by using hardware, and in most cases the former is the preferred. Based on such an understanding, the technical solutions of the present invention essentially, or the part contributing to the prior art, may be presented in the form of a software product. The computer software product is stored in a storage medium (for example, a ROM/RAM, a magnetic disk, or an optical disc) including several instructions to enable a terminal (which may be a mobile phone, a computer, a server, an air conditioner, a network device, or the like) to perform the methods described in the embodiments of this application.

The embodiments of this application have been described above in combination with the accompanying drawings. This application is not limited to the specific embodiments described above, and the specific embodiments described above are merely exemplary and not limitative.

**Claims**

1. An access method, comprising:

   obtaining (1201), by a terminal, a first delay Doppler domain data set, wherein the first delay Doppler domain data set is obtained by mapping N pilot signals on a resource location of a first delay Doppler domain resource block, and N is an integer greater than 1;
   **characterized in that**, the method further comprises
   accessing (1202), by the terminal, P first network side devices based on a detection result of the first delay Doppler domain data set, wherein P is an integer less than or equal to N; and
   the P first network side devices are any of the following:

   P first network side devices corresponding to P first resource locations, wherein the P first resource locations are P resource locations where peak values are detected on the first delay Doppler domain resource block; and
   P first network side devices corresponding to P first pilot signals, wherein the P first pilot signals are P pilot signals where peak values are detected.

2. The method according to claim 1, wherein the N pilot signals are: pilot pulses; or, pilot sequences.

3. The method according to claim 2, wherein in a case that the N pilot signals are the pilot sequences, any of the following is satisfied:

   resource locations to which the N pilot signals are mapped are orthogonal, the N pilot signals are identical pilot sequences, and the P first network side devices are P first network side devices corresponding to the P first resource locations;
   resource locations to which the N pilot signals are mapped are orthogonal or partially overlapped, the N pilot signals are different pilot sequences, and the P first network side devices are P first network side devices corresponding to the P first resource locations or P first network side devices corresponding to the P first pilot signals; and
   resource locations to which the N pilot signals are mapped are the same, the N pilot signals are different pilot sequences, and the P first network side devices are P first network side devices corresponding to the P first pilot signals.

4. The method according to claim 2, wherein in a case that the N pilot signals are the pilot pulses, the following is satisfied:

   the terminal is temporally synchronous with N first network side devices corresponding to the N pilot signals;
   the resource locations to which the N pilot signals are mapped are orthogonal; and
   the P first network side devices are P first network side devices corresponding to the P first resource locations.

5. The method according to claim 1, wherein the accessing (1202), by the terminal, P first network side devices based on a detection result of the first delay Doppler domain data set comprises:

   performing detection, by the terminal, on the first delay Doppler domain data set based on first priori information, to obtain a detection result; and

accessing, by the terminal, P first network side devices based on the detection result and second priori information, wherein

in a case that the pilot signals are pilot pulses, the first priori information comprises a resource location set, to which the pilot signals are mapped, on the first delay Doppler domain resource block, and in a case that the pilot signals are pilot sequences, the first priori information comprises at least one of a resource location set, to which the pilot signals are mapped, on the first delay Doppler domain resource block and a pilot sequence set; and the second priori information comprises at least one of the following:

a target threshold, wherein the target threshold is used for characterizing a channel quality between the terminal and a network side device; and

a maximum number of network side devices to be accessed simultaneously that the terminal supports.

6. The method according to claim 5, wherein the target threshold comprises at least one of the following: a detection threshold; a delay threshold; or a Doppler threshold.

7. The method according to claim 1, wherein the obtaining (1201), by a terminal, a first delay Doppler domain data set comprises:

receiving, by the terminal, a time domain sampling point set, wherein the time domain sampling point set is determined based on N second delay Doppler domain data sets, and each second delay Doppler domain data set is obtained by mapping one pilot signal on the first delay Doppler domain resource block; and

recovering, by the terminal, the first delay Doppler domain data set based on the time domain sampling point set.

8. An access apparatus (1700), comprising:

an obtaining module (1701), configured to obtain a first delay Doppler domain data set, wherein the first delay Doppler domain data set is obtained by mapping N pilot signals on a resource location of a first delay Doppler domain resource block, and N is an integer greater than 1;

**characterized in that**, the apparatus (1700) further comprises

an access module (1702), configured to access P first network side devices based on a detection result of the first delay Doppler domain data set, wherein P is an integer less than or equal to N; and

the P first network side devices are any of the following:

P first network side devices corresponding to P first resource locations, wherein the P first resource locations are P resource locations where peak values are detected on the first delay Doppler domain resource block; and

P first network side devices corresponding to P first pilot signals, wherein the P first pilot signals are P pilot signals where peak values are detected.

9. The access apparatus (1700) according to claim 8, wherein the N pilot signals are: pilot pulses; or, pilot sequences.

10. The access apparatus (1700) according to claim 9, wherein in a case that the N pilot signals are the pilot sequences, any of the following is satisfied:

resource locations to which the N pilot signals are mapped are orthogonal, the N pilot signals are identical pilot sequences, and the P first network side devices are P first network side devices corresponding to the P first resource locations;

resource locations to which the N pilot signals are mapped are orthogonal or partially overlapped, the N pilot signals are different pilot sequences, and the P first network side devices are P first network side devices corresponding to the P first resource locations or P first network side devices corresponding to the P first pilot signals; and

resource locations to which the N pilot signals are mapped are the same, the N pilot signals are different pilot sequences, and the P first network side devices are P first network side devices corresponding to the P first pilot signals.

11. The access apparatus (1700) according to claim 9, wherein in a case that the N pilot signals are the pilot pulses, the following is satisfied:

the apparatus (1700) is temporally synchronous with N first network side devices corresponding to the N pilot signals;

the resource locations to which the N pilot signals are mapped are orthogonal; and

the P first network side devices are P first network side devices corresponding to the P first resource locations.

12. The access apparatus (1700) according to claim 8, wherein the access module (1702) comprises:

a detection unit, configured to perform detection on the first delay Doppler domain data set based on first priori information, to obtain a detection result; and

an access unit, configured to access P first network side devices based on the detection result and second priori information, wherein

in a case that the pilot signals are pilot pulses, the first priori information comprises a resource location set, to which the pilot signals are mapped, on the first delay Doppler domain resource block, and in a case that the pilot signals are pilot sequences, the first priori information comprises at least one of a resource location set, to which the pilot signals are mapped, on the first delay Doppler domain resource block and a pilot sequence set; and

the second priori information comprises at least one of the following:

a target threshold, wherein the target threshold is used for characterizing a channel quality between the apparatus (1700) and a network side device; and

a maximum number of network side devices to be accessed simultaneously that the apparatus (1700) supports.

13. The access apparatus (1700) according to claim 12, wherein the target threshold comprises at least one of the following: a detection threshold; a delay threshold; or a Doppler threshold.

14. A readable storage medium on which a program or instructions are stored, wherein when the program or the instructions are executed by a processor (1902), the steps of the access method according to any of claims 1 to 7 are implemented.

15. A computer program product, wherein the program product is stored on a non-volatile storage medium, wherein the program product is executed by at least one processor (1902), to implement the access method according to any of claims 1 to 7.

**Patentansprüche**

1. Ein Zugriffsverfahren, das Folgendes beinhaltet:

Erhalten (1201), durch ein Endgerät, eines ersten Verzögerungs-Doppler-Domänendatensatzes, wobei der erste Verzögerungs-Doppler-Domänendatensatz durch Abbilden von N Pilotsignalen auf einem Ressourcenstandort eines ersten Verzögerungs-Doppler-Domänenresourcenblocks erhalten wird und wobei N eine Ganzzahl ist, die größer als 1 ist;
**dadurch gekennzeichnet, dass** das Verfahren ferner Folgendes beinhaltet:

Zugreifen (1202), durch das Endgerät, auf P erste Netzwerk-Seiten-Vorrichtungen basierend auf einem Detektionsresultat des ersten Verzögerungs-Doppler-Domänendatensatzes, wobei P eine Ganzzahl ist, die kleiner als oder gleich N ist; und
die P ersten Netzwerk-Seiten-Vorrichtungen beliebige der Folgenden sind:

P erste Netzwerk-Seiten-Vorrichtungen, die P ersten Ressourcenstandorten entsprechen, wobei die P ersten Ressourcenstandorte P Ressourcenstandorte sind, bei denen Spitzenwerte auf dem ersten Verzögerungs-Doppler-Domänenresourcenblock detektiert werden; und
P erste Netzwerk-Seiten-Vorrichtungen, die P ersten Pilotsignalen entsprechen, wobei die P ersten Pilotsignale P Pilotsignale sind, bei denen Spitzenwerte detektiert werden.

2. Verfahren gemäß Anspruch 1, wobei die N Pilotsignale Folgendes sind: Pilotimpulse; oder Pilotsequenzen.

3. Verfahren gemäß Anspruch 2, wobei in einem Fall, dass die N Pilotsignale Pilotsequenzen sind, beliebige von Folgendem erfüllt werden:

Ressourcenstandorte, auf die die N Pilotsignale abgebildet werden, sind orthogonal, wobei die N Pilotsignale identische Pilotsequenzen sind und die P ersten Netzwerk-Seiten-Vorrichtungen P erste Netzwerk-Seiten-Vorrichtungen sind, die den P ersten Ressourcenstandorten entsprechen;
Ressourcenstandorte, auf die die N Pilotsignale abgebildet werden, sind orthogonal oder überlappen sich teilweise, wobei die N-Pilotsignale unterschiedliche Pilotsequenzen sind, und die P ersten Netzwerk-Seiten-Vorrichtungen P erste Netzwerk-Seiten-Vorrichtungen sind, die den P ersten Ressourcenstandorten entsprechen, oder P erste Netzwerk-Seiten-Vorrichtungen sind, die den P ersten Pilotsignalen entsprechen; und
Ressourcenstandorte, auf die die N Pilotsignale abgebildet werden, sind dieselben, wobei die N Pilotsignale unterschiedliche Pilotsequenzen sind und die P ersten Netzwerk-Seiten-Vorrichtungen P erste Netzwerk-Seiten-Vorrichtungen sind, die den P ersten Pilotsignalen entsprechen.

4. Verfahren gemäß Anspruch 2, wobei in einem Fall, dass die N Pilotsignale Pilotimpulse sind, Folgendes erfüllt wird:

das Endgerät ist temporär synchron zu den N ersten Netzwerk-Seiten-Vorrichtungen, die den N Pilotsignalen entsprechen;
die Ressourcenstandorte, auf die die N Pilotsignale abgebildet werden, sind orthogonal; und
die P ersten Netzwerk-Seiten-Vorrichtungen sind P erste Netzwerk-Seiten-Vorrichtungen, die den P ersten Ressourcenstandorten entsprechen.

5. Verfahren gemäß Anspruch 1, wobei das Zugreifen (1202), durch das Endgerät, auf P erste Netzwerk-Seiten-Vorrichtungen basierend auf einem Detektionsresultat des ersten Verzögerungs-Doppler-Domänendatensatzes Folgendes beinhaltet:

Durchführen einer Detektion, durch das Endgerät, an dem ersten Verzögerungs-Doppler-Domänendatensatz basierend auf ersten Vorabinformationen durchzuführen, um ein Detektionsresultat zu erhalten; und
Zugreifen, durch das Endgerät, auf P erste Netzwerk-Seiten-Vorrichtungen basierend auf dem Detektionsresultat und zweiten Vorabinformationen zuzugreifen, wobei in einem Fall, dass die Pilotsignale Pilotimpulse sind, die Vorabinformationen einen Ressourcenstandortsatz, auf die die Pilotsignale abgebildet werden, auf dem ersten Verzögerungs-Doppler-Domänenresourcenblock beinhalten, und
in einem Fall, dass die Pilotsignale Pilotsequenzen sind, die Vorabinformationen mindestens einen von einem Ressourcenstandortsatz, auf die die Pilotsignale abgebildet werden, auf dem ersten Verzögerungs-Doppler-Domänenresourcenblock und einem Pilotsequenzsatz beinhalten, und
die zweiten Vorabinformationen mindestens eines der Folgenden beinhaltet:

einen Zielschwellenwert, wobei der Zielschwellenwert für das Charakterisieren einer Kanalqualität zwischen dem Endgerät und einer Netzwerk-Seiten-Vorrichtung verwendet wird; und
eine maximale Anzahl an Netzwerk-Seiten-Vorrichtungen, auf die simultan zugegriffen werden soll, die das Endgerät unterstützt.

6. Verfahren gemäß Anspruch 5, wobei der Zielschwellenwert mindestens eines der Folgenden beinhaltet: einen Detektionsschwellenwert; einen Verzögerungsschwellenwert; oder einen Doppler-Schwellenwert.

7. Verfahren gemäß Anspruch 1, wobei das Erhalten (1201), durch ein erstes Endgerät, eines ersten Verzögerungs-Doppler-Domänendatensatzes Folgendes beinhaltet:

Empfangen, durch das Endgerät, eines Zeitdomänen-Sampling-Punkt-Satzes, wobei der Zeitdomänen-Sampling-Punkt-Satz basierend auf N zweiten Verzögerungs-Doppler-Domänendatensätzen bestimmt wird, und jeder zweite Verzögerungs-Doppler-Domänendatensatz durch Abbilden eines Pilotsignals auf den ersten Verzögerungs-Doppler-Domänenresourcenblock erhalten wird; und
Wiederherstellen, durch das Endgerät, des ersten Verzögerungs-Doppler-Domänendatensatzes basierend auf dem Zeitdomänen-Sampling-Punkt-Satz.

8. Eine Zugriffsvorrichtung (1700), die Folgendes beinhaltet:

ein Erhaltungsmodul (1701), das dazu konfiguriert ist, einen ersten Verzögerungs-Doppler-Domänendatensatz zu erhalten, wobei der erste Verzögerungs-Doppler-Domänendatensatz durch Abbilden von N Pilotsignalen auf einem Ressourcenstandort eines ersten Verzögerungs-Doppler-Domänenresourcenblocks erhalten wird und wobei N eine Ganzzahl ist, die größer als 1 ist;

**dadurch gekennzeichnet, dass** die Vorrichtung (1700) ferner Folgendes beinhaltet:

ein Zugriffsmodul (1702), das dazu konfiguriert ist, auf P erste Netzwerk-Seiten-Vorrichtungen basierend auf einem Detektionsresultat des ersten Verzögerungs-Doppler-Domänendatensatzes zuzugreifen, wobei P eine Ganzzahl ist, die kleiner als oder gleich N ist; und

die P ersten Netzwerk-Seiten-Vorrichtungen beliebige der Folgenden sind:

P erste Netzwerk-Seiten-Vorrichtungen, die P ersten Ressourcenstandorten entsprechen, wobei die P ersten Ressourcenstandorte P Ressourcenstandorte sind, bei denen Spitzenwerte auf dem ersten Verzögerungs-Doppler-Domänenresourcenblock detektiert werden; und

P erste Netzwerk-Seiten-Vorrichtungen, die P ersten Pilotsignalen entsprechen, wobei die P ersten Pilotsignale P Pilotsignale sind, bei denen Spitzenwerte detektiert werden.

9. Zugriffsvorrichtung (1700) gemäß Anspruch 8, wobei die N Pilotsignale Folgendes sind: Pilotimpulse; oder Pilotsequenzen.

10. Zugriffsvorrichtung (1700) gemäß Anspruch 9, wobei in einem Fall, dass die N Pilotsignale Pilotsequenzen sind, beliebige von Folgendem erfüllt werden:

Ressourcenstandorte, auf die die N Pilotsignale abgebildet werden, sind orthogonal, wobei die N Pilotsignale identische Pilotsequenzen sind und die P ersten Netzwerk-Seiten-Vorrichtungen P erste Netzwerk-Seiten-Vorrichtungen sind, die den P ersten Ressourcenstandorten entsprechen;

Ressourcenstandorte, auf die die N Pilotsignale abgebildet werden sind orthogonal oder überlappen sich teilweise, wobei die N-Pilotsignale unterschiedliche Pilotsequenzen sind, und die P ersten Netzwerk-Seiten-Vorrichtungen P erste Netzwerk-Seiten-Vorrichtungen sind, die den P ersten Ressourcenstandorten entsprechen, oder P erste Netzwerk-Seiten-Vorrichtungen sind, die den P ersten Pilotsignalen entsprechen; und

Ressourcenstandorte, auf die die N Pilotsignale abgebildet werden, sind dieselben, wobei die N Pilotsignale unterschiedliche Pilotsequenzen sind und die P ersten Netzwerk-Seiten-Vorrichtungen P erste Netzwerk-Seiten-Vorrichtungen sind, die den P ersten Pilotsignalen entsprechen.

11. Zugriffsvorrichtung (1700) gemäß Anspruch 9, wobei in einem Fall, dass die N Pilotsignale Pilotimpulse sind, Folgendes erfüllt wird:

die Vorrichtung (1700) ist temporär synchron zu den N ersten Netzwerk-Seiten-Vorrichtungen, die den N Pilotsignalen entsprechen;

die Ressourcenstandorte, auf die die N Pilotsignale abgebildet werden, sind orthogonal; und

die P ersten Netzwerk-Seiten-Vorrichtungen sind P erste Netzwerk-Seiten-Vorrichtungen, die den P ersten Ressourcenstandorten entsprechen.

12. Zugriffsvorrichtung (1700) gemäß Anspruch 8, wobei das Zugriffsmodul (1702) Folgendes beinhaltet:

eine Detektionseinheit, die dazu konfiguriert ist, eine Detektion an dem ersten Verzögerungs-Doppler-Domänendatensatz basierend auf ersten Vorabinformationen durchzuführen, um ein Detektionsresultat zu erhalten; und

eine Zugriffseinheit, die dazu konfiguriert ist, auf P erste Netzwerk-Seiten-Vorrichtungen basierend auf dem Detektionsresultat und zweiten Vorabinformationen zuzugreifen,

wobei

in einem Fall, dass die Pilotsignale Pilotimpulse sind, die Vorabinformationen einen Ressourcenstandortsatz, auf die die Pilotsignale abgebildet werden, auf dem ersten Verzögerungs-Doppler-Domänenresourcenblock beinhalten, und in einem Fall, dass die Pilotsignale Pilotsequenzen sind, die Vorabinformationen mindestens einen von einem Ressourcenstandortsatz, auf die die Pilotsignale abgebildet werden, auf dem ersten Verzögerungs-Doppler-Domänenresourcenblock und einem Pilotsequenzsatz beinhalten; und

die zweiten Vorabinformationen mindestens eines der Folgenden beinhaltet:

einen Zielschwellenwert, wobei der Zielschwellenwert für das Charakterisieren einer Kanalqualität zwischen der Vorrichtung (1700) und einer Netzwerk-Seiten-Vorrichtung verwendet wird; und

eine maximale Anzahl an Netzwerk-Seiten-Vorrichtungen, auf die simultan zugegriffen werden soll, die die Vorrichtung (1700) unterstützt.

13. Zugriffsvorrichtung (1700) gemäß Anspruch 12, wobei der Zielschwellenwert mindestens eines der Folgenden beinhaltet: einen Detektionsschwellenwert; einen Verzögerungsschwellenwert; oder einen Doppler-Schwellenwert.

14. Ein lesbares Speichermedium, auf dem ein Programm oder Anweisungen gespeichert sind, wobei, wenn das Programm oder die Anweisungen von einem Prozessor (1902) ausgeführt, die Schritte des Zugriffsverfahrens gemäß einem der Ansprüche 1 bis 7 implementiert werden.

15. Ein Computerprogrammprodukt, wobei das Programmprodukt auf einem nicht flüchtigen Speichermedium gespeichert ist, wobei das Programmprodukt von mindestens einem Prozessor (1902) ausgeführt wird, um das Zugriffsverfahren gemäß einem der Ansprüche 1 bis 7 zu implementieren.

**Revendications**

1.  Un procédé d'accès, comprenant :

    le fait d'obtenir (1201), grâce à un terminal, un premier jeu de données du domaine retard-Doppler, le premier jeu de données du domaine retard-Doppler étant obtenu par mise en correspondance de N signaux pilotes avec un emplacement de ressource d'un premier bloc de ressource du domaine retard-Doppler, et N étant un entier relatif supérieur à 1 ;
    **caractérisé en ce que** le procédé comprend en outre
    le fait d'accéder (1202), grâce au terminal, à P premiers dispositifs côté réseau sur la base d'un résultat de détection du premier jeu de données du domaine retard-Doppler, P étant un entier relatif inférieur ou égal à N ; et les P premiers dispositifs côté réseau sont n'importe lesquels des dispositifs suivants :

    P premiers dispositifs côté réseau correspondant à P premiers emplacements de ressource, les P premiers emplacements de ressource étant P emplacements de ressource où des valeurs de crête sont détectées sur le premier bloc de ressource du domaine retard-Doppler ; et
    P premiers dispositifs côté réseau correspondant à P premiers signaux pilotes, les P premiers signaux pilotes étant P signaux pilotes où des valeurs de crête sont détectées.

2.  Le procédé selon la revendication 1, dans lequel les N signaux pilotes sont : des impulsions pilotes ; ou des séquences pilotes.

3.  Le procédé selon la revendication 2, dans lequel, dans un cas où les N signaux pilotes sont les séquences pilotes, n'importe laquelle des conditions suivantes est satisfaite :

    des emplacements de ressource, avec lesquels les N signaux pilotes sont mis en correspondance, sont orthogonaux, les N signaux pilotes sont des séquences pilotes identiques, et les P premiers dispositifs côté réseau sont P premiers dispositifs côté réseau correspondant aux P premiers emplacements de ressource ;
    des emplacements de ressource, avec lesquels les N signaux pilotes sont mis en correspondance, sont orthogonaux ou partiellement chevauchés, les N signaux pilotes sont des séquences pilotes différentes, et les P premiers dispositifs côté réseau sont P premiers dispositifs côté réseau correspondant aux P premiers emplacements de ressource ou P premiers dispositifs côté réseau correspondant aux P premiers signaux pilotes ; et
    des emplacements de ressource, avec lesquels les N signaux pilotes sont mis en correspondance, sont semblables, les N signaux pilotes sont des séquences pilotes différentes, et les P premiers dispositifs côté réseau sont P premiers dispositifs côté réseau correspondant aux P premiers signaux pilotes.

4.  Le procédé selon la revendication 2, dans lequel, dans un cas où les N signaux pilotes sont les impulsions pilotes, les conditions suivantes sont satisfaites :

    le terminal est temporellement synchrone avec N premiers dispositifs côté réseau correspondant aux N signaux pilotes ;
    les emplacements de ressource, avec lesquels les N signaux pilotes sont mis en correspondance, sont orthogonaux ; et

les P premiers dispositifs côté réseau sont P premiers dispositifs côté réseau correspondant aux P premiers emplacements de ressource.

5. Le procédé selon la revendication 1, dans lequel le fait d'accéder (1202), grâce au terminal, à P premiers dispositifs côté réseau sur la base d'un résultat de détection du premier jeu de données du domaine retard-Doppler comprend :

le fait d'effectuer une détection, grâce au terminal, sur le premier jeu de données du domaine retard-Doppler sur la base de premières informations a priori, afin d'obtenir un résultat de détection ; et

le fait d'accéder, grâce au terminal, à P premiers dispositifs côté réseau sur la base du résultat de détection et de deuxièmes informations a priori,

dans un cas où les signaux pilotes sont des impulsions pilotes, les premières informations a priori comprenant un jeu d'emplacements de ressource, avec lequel les signaux pilotes sont mis en correspondance, sur le premier bloc de ressource du domaine retard-Doppler, et

dans un cas où les signaux pilotes sont des séquences pilotes, les premières informations a priori comprenant au moins un jeu parmi un jeu d'emplacements de ressource, avec lequel les signaux pilotes sont mis en correspondance, sur le premier bloc de ressource du domaine retard-Doppler et un jeu de séquences pilotes ; et

les deuxièmes informations a priori comprenant au moins un élément parmi les suivants :

un seuil cible, le seuil cible étant utilisé pour la caractérisation d'une qualité de canal entre le terminal et un dispositif côté réseau ; et

un nombre maximum de dispositifs côté réseau auxquels accéder simultanément et que le terminal prend en charge.

6. Le procédé selon la revendication 5, dans lequel le seuil cible comprend au moins un élément parmi les suivants : un seuil de détection ; un seuil de retard ; ou un seuil Doppler.

7. Le procédé selon la revendication 1, dans lequel le fait d'obtenir (1201), grâce à un terminal, un premier jeu de données du domaine retard-Doppler comprend :

le fait de recevoir, grâce au terminal, un jeu de points d'échantillonnage du domaine temporel, le jeu de points d'échantillonnage du domaine temporel étant déterminé sur la base de N deuxièmes jeux de données du domaine retard-Doppler, et chaque deuxième jeu de données du domaine retard-Doppler étant obtenu par mise en correspondance d'un signal pilote avec le premier bloc de ressource du domaine retard-Doppler ; et

le fait de récupérer, grâce au terminal, le premier jeu de données du domaine retard-Doppler sur la base du jeu de points d'échantillonnage du domaine temporel.

8. Un appareil d'accès (1700), comprenant :

un module d'obtention (1701), configuré afin d'obtenir un premier jeu de données du domaine retard-Doppler, le premier jeu de données du domaine retard-Doppler étant obtenu par mise en correspondance de N signaux pilotes avec un emplacement de ressource d'un premier bloc de ressource du domaine retard-Doppler, et N étant un entier relatif supérieur à 1 ;

caractérisé en ce que l'appareil (1700) comprend en outre

un module d'accès (1702), configuré afin d'accéder à P premiers dispositifs côté réseau sur la base d'un résultat de détection du premier jeu de données du domaine retard-Doppler, P étant un entier relatif inférieur ou égal à N ; et

les P premiers dispositifs côté réseau sont n'importe lesquels des dispositifs suivants :

P premiers dispositifs côté réseau correspondant à P premiers emplacements de ressource, les P premiers emplacements de ressource étant P emplacements de ressource où des valeurs de crête sont détectées sur le premier bloc de ressource du domaine retard-Doppler ; et

P premiers dispositifs côté réseau correspondant à P premiers signaux pilotes, les P premiers signaux pilotes étant P signaux pilotes où des valeurs de crête sont détectées.

9. L'appareil d'accès (1700) selon la revendication 8, dans lequel les N signaux pilotes sont : des impulsions pilotes ; ou des séquences pilotes.

**10.** L'appareil d'accès (1700) selon la revendication 9, dans lequel, dans un cas où les N signaux pilotes sont les séquences pilotes, n'importe laquelle des conditions suivantes est satisfaite :

des emplacements de ressource, avec lesquels les N signaux pilotes sont mis en correspondance, sont orthogonaux, les N signaux pilotes sont des séquences pilotes identiques, et les P premiers dispositifs côté réseau sont P premiers dispositifs côté réseau correspondant aux P premiers emplacements de ressource ;

des emplacements de ressource, avec lesquels les N signaux pilotes sont mis en correspondance, sont orthogonaux ou partiellement chevauchés, les N signaux pilotes sont des séquences pilotes différentes, et les P premiers dispositifs côté réseau sont P premiers dispositifs côté réseau correspondant aux P premiers emplacements de ressource ou P premiers dispositifs côté réseau correspondant aux P premiers signaux pilotes ; et

des emplacements de ressource, avec lesquels les N signaux pilotes sont mis en correspondance, sont semblables, les N signaux pilotes sont des séquences pilotes différentes, et les P premiers dispositifs côté réseau sont P premiers dispositifs côté réseau correspondant aux P premiers signaux pilotes.

**11.** L'appareil d'accès (1700) selon la revendication 9, dans lequel, dans un cas où les N signaux pilotes sont les impulsions pilotes, les conditions suivantes sont satisfaites :

l'appareil (1700) est temporellement synchrone avec N premiers dispositifs côté réseau correspondant aux N signaux pilotes ;

les emplacements de ressource, avec lesquels les N signaux pilotes sont mis en correspondance, sont orthogonaux ; et

les P premiers dispositifs côté réseau sont P premiers dispositifs côté réseau correspondant aux P premiers emplacements de ressource.

**12.** L'appareil d'accès (1700) selon la revendication 8, dans lequel le module d'accès (1702) comprend :

une unité de détection, configurée afin d'effectuer une détection sur le premier jeu de données du domaine retard-Doppler sur la base de premières informations a priori, afin d'obtenir un résultat de détection ; et

une unité d'accès, configurée afin d'accéder à P premiers dispositifs côté réseau sur la base du résultat de détection et de deuxièmes informations a priori,

dans un cas où les signaux pilotes sont des impulsions pilotes, les premières informations a priori comprenant un jeu d'emplacements de ressource, avec lequel les signaux pilotes sont mis en correspondance, sur le premier bloc de ressource du domaine retard-Doppler, et dans un cas où les signaux pilotes sont des séquences pilotes, les premières informations a priori comprenant au moins un jeu parmi un jeu d'emplacements de ressource, avec lequel les signaux pilotes sont mis en correspondance, sur le premier bloc de ressource du domaine retard-Doppler et un jeu de séquences pilotes ; et

les deuxièmes informations a priori comprenant au moins un élément parmi les suivants :

un seuil cible, le seuil cible étant utilisé pour la caractérisation d'une qualité de canal entre l'appareil (1700) et un dispositif côté réseau ; et

un nombre maximum de dispositifs côté réseau auxquels accéder simultanément et que l'appareil (1700) prend en charge.

**13.** L'appareil d'accès (1700) selon la revendication 12, dans lequel le seuil cible comprend au moins un élément parmi les suivants : un seuil de détection ; un seuil de retard ; ou un seuil Doppler.

**14.** Un support de stockage lisible sur lequel sont stockés un programme ou des instructions, dans lequel, lorsque le programme ou les instructions sont exécutés par un processeur (1902), les étapes du procédé d'accès selon n'importe lesquelles des revendications 1 à 7 sont mises en œuvre.

**15.** Un produit-programme d'ordinateur, le produit-programme étant stocké sur un support de stockage non volatil, le produit-programme étant exécuté par au moins un processeur (1902), afin de mettre en œuvre le procédé d'accès selon n'importe lesquelles des revendications 1 à 7.

FIG. 1

FIG. 2

FIG. 3

FIG. 4

FIG. 5

FIG. 6

701 702 703

Delay (M)

Doppler (N)

FIG. 7

801 802 803 804 805

Transmission signal

τ
M

Delay

Doppler

N

ν

Received signal

τ
M

Delay

Doppler

N

ν

FIG. 8

FIG. 9

FIG. 10

FIG. 11

A terminal obtains a first delay Doppler domain data set    1201

The terminal accesses P first network side devices based on a detection result of the first delay Doppler domain data set    1202

FIG. 12

Delay Doppler mapping

Time frequency domain
mapping

Channel
transmission and
merging

**FIG. 13**

FIG. 14

Delay Doppler mapping

Time frequency domain mapping

Channel I (TF domain equivalence)

Channel transmission and merging

Channel II (TF domain equivalence)

Delay Doppler mapping

Function of channel II

Function of channel I

Doppler

FIG. 15

A first network side device maps a pilot signal on a resource location of a first delay Doppler domain resource block, to obtain a second delay Doppler domain data set — 1601

The first network side device sends a time domain sampling point to a terminal, where the time domain sampling point is determined based on the second delay Doppler domain data set — 1602

FIG. 16

1700

Access apparatus

Obtaining module 1701

Access module 1702

FIG.17

1800

Access apparatus

Mapping module 1801

Sending module 1802

FIG.18

1900

Communication device

1901

Memory

1902

Processor

## FIG. 19

2000

| 2001 | Radio frequency unit |
|---|---|
| | Network module — 2002 |

2010

| 2009 | Memory | Audio output unit — 2003 |
| | Application | |
| | Operating system | |

Processor

2004
Input unit
Graphics processing unit — 20041
Microphone — 20042

| 2008 | Interface unit |

2007
User input unit
20071 — Touch panel
20072 — Other input device

2006
Display unit — 20061
Display panel

Sensor — 2005

## FIG. 20

FIG. 21

**EP 4 294 083 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2019342136 A1
- CN 112003808 A